# EUROPEAN PATENT APPLICATION

(11) **EP 4 722 867 A1**
(43) Date of publication of application: **08.04.2026**
(21) Application number: 24845754.1
(22) Date of filing: 23.05.2024
(51) Int. Cl.: G06F 3/01, G06F 3/16, G06F 1/16, B60K 35/00, B60W 40/04, G06F 3/0484, H04W 4/80, B60K 35/85, B60K 35/21, B60K 35/28

(54) **ELECTRONIC DEVICE, METHOD, AND NON-TRANSITORY COMPUTER-READABLE STORAGE MEDIUM FOR OBTAINING NOTIFICATION FROM VEHICLE**

(30) Priority: 21.07.2023 KR 20230095635; 14.09.2023 KR 20230122799
(71) Applicant: Samsung Electronics Co., Ltd., Suwon-si, Gyeonggi-do 16677 (KR)
(72) Inventor: SON, Dongil, Suwon-si, Gyeonggi-do 16677 (KR); LEE, Gyujin, Suwon-si, Gyeonggi-do 16677 (KR); KIM, Dohyoung, Suwon-si, Gyeonggi-do 16677 (KR); KIM, Suhyun, Suwon-si, Gyeonggi-do 16677 (KR); KIM, Hyeongseok, Suwon-si, Gyeonggi-do 16677 (KR); LEE, Seungjoon, Suwon-si, Gyeonggi-do 16677 (KR)
(74) Representative: HGF
(86) International application number: PCT/KR2024/007031
(87) International publication number: WO 2025/023450

(57) **Abstract**

This electronic device may comprise at least one communication circuit, at least one processor, and at least one memory for storing instructions. The instructions may cause, when executed by the at least one processor, the electronic device to receive a request for a first communication connection from at least one other communication circuit of a vehicle through the at least one communication circuit, and the instructions may cause, when executed by the at least one processor, the electronic device to: on the basis of the first communication connection, receive object information on at least one object around the vehicle from the at least one other communication circuit; on the basis of the object information, identify an object out of a user's gaze among the at least one object; and on the basis of the object information, output a notification on the identified object.

## Description

### [Technical Field]

The following descriptions relate to an electronic device, a method, and a non-transitory computer readable storage medium for obtaining a notification from a vehicle.

### [Background Art]

An electronic device may provide multiple functions. For example, the electronic device may output media via a wired and/or wireless communication connection with an external electronic device. It may identify one or more electronic devices capable of establishing a communication connection with a user. For example, the one or more electronic devices may include a wearable device and a vehicle.

The above-described information may be provided as related art for the purpose of helping the understanding of the present disclosure. No claim or determination is raised as to whether any of the above-described content may be applied as prior art related to the present disclosure.

### [Disclosure]

### [Technical Solution]

An electronic device is disclosed. The electronic device may comprise at least one first communication circuit. The electronic device may comprise at least one sensor for obtaining data for identifying positions of irises of two eyes of the user. The electronic device may comprise at least one processor. The electronic device may comprise at least one memory storing instructions. The instructions, when executed by the at least one processor, may cause the electronic device to receive, via the at least one first communication circuit, a request for a first communication connection from at least one second communication circuit of a vehicle. The instructions, when executed by the at least one processor, may cause the electronic device to, based on the first communication connection, receive object information regarding at least one object near the vehicle from the at least one second communication circuit. The instructions, when executed by the at least one processor, may cause the electronic device to identify a gaze of the user based on the data for identifying the positions of the irises. The instructions, when executed by the at least one processor, may cause the electronic device to identify an object out of the gaze of the user from among the at least one object, based on the object information. The instructions, when executed by the at least one processor, may cause the electronic device to, based on the object information, output a notification regarding the object identified as out of the gaze.

A method is disclosed. The method may be performed by an electronic device including at least one communication circuit and at least one sensor obtaining data for identifying positions of irises of two eyes of the user. The method may comprise receiving, via the at least one first communication circuit, a request for a first communication connection from at least one second communication circuit of a vehicle. The method may comprise, based on the first communication connection, receiving object information regarding at least one object near the vehicle from the at least one other communication circuit. The method may comprise identifying a gaze of the user based on the data for identifying the positions of the irises. The method may comprise identifying an object out of the gaze of the user from among the at least one object, based on the object information. The method may comprise, based on the object information, outputting a notification regarding the object identified as out of the gaze.

A non-transitory computer readable storage medium is disclosed. The non-transitory computer readable storage medium may comprise a program including instructions. The instructions, when executed by at least one processor of an electronic device comprising at least one communication circuit and at least one sensor obtaining data for identifying positions of irises of two eyes of the user, may cause the electronic device to receive, via the at least one first communication circuit, a request for a first communication connection from at least one second communication circuit of a vehicle. The instructions, when executed by the at least one processor, may cause the electronic device to, based on the first communication connection, receive object information regarding at least one object near the vehicle from the at least one second communication circuit. The instructions, when executed by the at least one processor, may cause the electronic device to identify a gaze of the user based on the data for identifying the positions of the irises. The instructions, when executed by the at least one processor, may cause the electronic device to identify an object out of the gaze of the user from among the at least one object, based on the object information. The instructions, when executed by the at least one processor, may cause the electronic device to, based on the object information, output a notification regarding the object identified as out of the gaze.

An electronic device is disclosed. The electronic device may comprise at least one sensor. The electronic device may comprise at least one other sensor obtaining data for identifying positions of irises of two eyes of the user. The electronic device may comprise at least one speaker. The electronic device may comprise at least one first communication circuit. The electronic device may comprise at least one processor. The electronic device may comprise at least one memory storing instructions. The instructions, when executed by the at least one processor, may cause the electronic device to receive, via the at least one first communication circuit, a request for a communication connection from at least one second communication circuit of an external electronic device. The instructions, when executed by the at least one processor, may cause the electronic device to, based on the communication connection, receive an audio content from the external electronic device. The instructions, when executed by the at least one processor, may cause the electronic device to output, via the at least one speaker, the audio content. The instructions, when executed by the at least one processor, may cause the electronic device to obtain information regarding at least one object near the electronic device via the at least one sensor. The instructions, when executed by the at least one processor, may cause the electronic device to identify a gaze of the user based on the data for identifying the positions of the irises. The instructions, when executed by the at least one processor, may cause the electronic device to identify an object out of the gaze of the user from among the at least one object, based on the information regarding the at least one object. The instructions, when executed by the at least one processor, may cause the electronic device to, based on that the object out of the gaze is identified, transmit a request for a first communication connection to the at least one second communication circuit via the at least one first communication circuit. The instructions, when executed by the at least one processor, may cause the electronic device to, based on the first communication connection, transmit, to the external electronic device, object information regarding the object identified as out of the gaze, for the external electronic device to output a notification regarding the identified object based on the object information regarding the object identified as out of the gaze.

A method is disclosed. The method may be performed by an electronic device comprising at least one sensor, at least one other sensor obtaining data for identifying positions of irises of two eyes of the user, at least one speaker, and at least one first communication circuit. The method may comprise receiving, via the at least one first communication circuit, a request for a communication connection from at least one second communication circuit of an external electronic device. The method may comprise, based on the communication connection, receiving an audio content from the external electronic device. The method may comprise outputting, via the at least one speaker, the audio content. The method may comprise obtaining information regarding at least one object near the electronic device via the at least one sensor. The method may comprise identifying a gaze of the user based on the data for identifying the positions of the irises. The method may comprise identifying an object out of the gaze of the user from among the at least one object, based on the information regarding the at least one object. The method may comprise, based on that the object out of the gaze is identified, transmitting a request for a first communication connection to the at least one second communication circuit via the at least one first communication circuit. The method may comprise, based on the first communication connection, transmitting, to the external electronic device, object information regarding the object identified as out of the gaze, for the external electronic device to output a notification regarding the identified object based on the object information regarding the object identified as out of the gaze.

A non-transitory computer readable storage medium is disclosed. The non-transitory computer readable storage medium may comprise a program including instructions. The instructions, when executed by at least one processor of an electronic device comprising at least one sensor, at least one other sensor obtaining data for identifying positions of irises of two eyes of the user, at least one speaker, and at least one first communication circuit, may cause the electronic device to receive, via the at least one first communication circuit, a request for a communication connection from at least one second communication circuit of an external electronic device. The instructions, when executed by the at least one processor, may cause the electronic device to, based on the communication connection, receive an audio content from the external electronic device. The instructions, when executed by the at least one processor, may cause the electronic device to output, via the at least one speaker, the audio content. The instructions, when executed by the at least one processor, may cause the electronic device to obtain information regarding at least one object near the electronic device via the at least one sensor. The instructions, when executed by the at least one processor, may cause the electronic device to identify a gaze of the user based on the data for identifying the positions of the irises. The instructions, when executed by the at least one processor, may cause the electronic device to identify an object out of the gaze of the user from among the at least one object, based on the information regarding the at least one object. The instructions, when executed by the at least one processor, may cause the electronic device to, based on that the object out of the gaze is identified, transmit a request for a first communication connection to the at least one second communication circuit via the at least one first communication circuit. The instructions, when executed by the at least one processor, may cause the electronic device to, based on the first communication connection, transmit, to the external electronic device, object information regarding the object identified as out of the gaze, for the external electronic device to output a notification regarding the identified object based on the object information regarding the object identified as out of the gaze.

### [Description of the Drawings]

FIG. 1 is a block diagram of an electronic device in a network environment according to various embodiments.
FIG. 2 is a simplified block diagram of an electronic device according to an embodiment.
FIG. 3A illustrates an example of communication connections between electronic devices according to an embodiment.
FIG. 3B illustrates an example of volume adjustment between electronic devices according to an embodiment.
FIG. 3C illustrates an example of a sequence of a communication connection between electronic devices according to an embodiment.
FIG. 3D illustrates an example of a driving situation of a vehicle according to an embodiment.
FIG. 4 is a flowchart indicating an operation of an electronic device according to an embodiment.
FIG. 5 is a flowchart indicating an operation of an electronic device according to an embodiment.
FIG. 6 is a flowchart indicating an operation of an electronic device according to an embodiment.
FIG. 7 is a flowchart indicating an operation of an electronic device according to an embodiment.
FIG. 8 is a flowchart indicating an operation of an electronic device according to an embodiment.
FIG. 9 is a flowchart indicating an operation of an electronic device according to an embodiment.
FIG. 10A illustrates an example of a perspective view of a wearable device according to an embodiment.
FIG. 10B illustrates an example of one or more hardware disposed in a wearable device according to an embodiment.
FIG. 11A illustrates an example of an exterior of a wearable device according to an embodiment.
FIG. 11B illustrates an example of an exterior of a wearable device according to an embodiment.
FIG. 12A illustrates an example of a user wearing a wearable device.
FIG. 12B illustrates an example of a screen displayed on a wearable device according to an embodiment.
FIG. 12C illustrates an example of a screen displayed on a wearable device or a display according to an embodiment.

### [Mode for Invention]

In the following, embodiments of the present disclosure will be described in detail with reference to the drawings so that those of ordinary skill in the art to which the present disclosure belongs may easily implement them. However, the present disclosure may be implemented in various different forms and is not limited to the embodiments described herein. Regarding the description of the drawings, the same or similar reference numerals may be used for the same or similar components. In addition, in the drawings and related descriptions, descriptions of well-known functions and configurations may be omitted for clarity and conciseness.

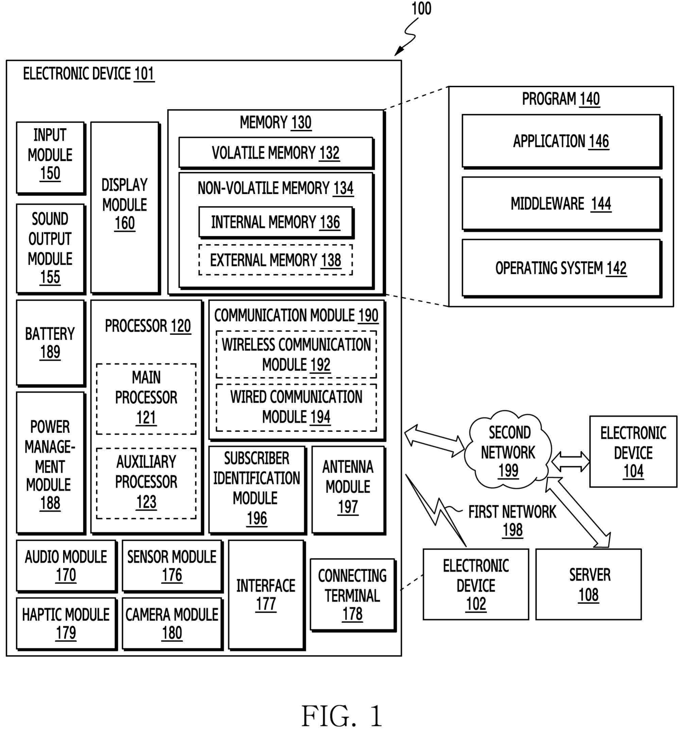

FIG. 1 is a block diagram of an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

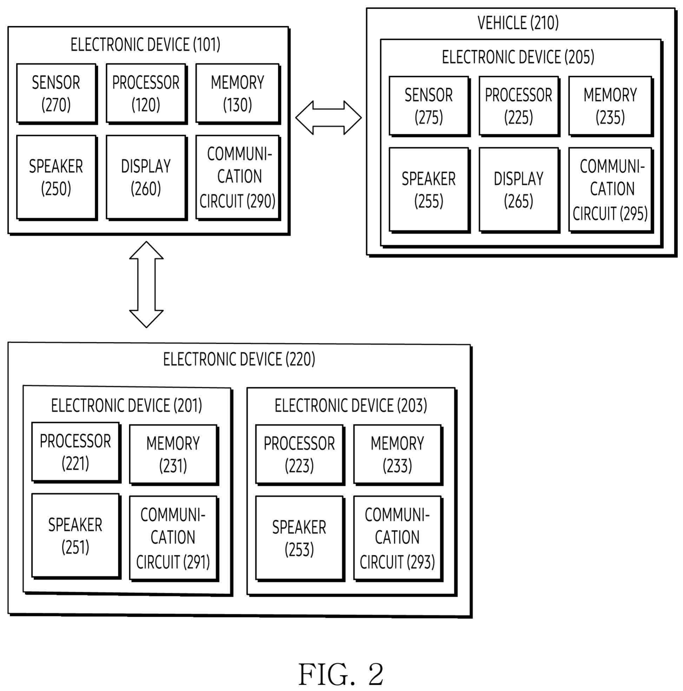

FIG. 2 is a simplified block diagram of an electronic device 101 according to an embodiment.

Referring to FIG. 2, according to an embodiment, the electronic device 101 may communicate with a vehicle 210 and/or at least one electronic device 201 and/or 203. The electronic device 101 may communicate with the vehicle 210 and/or the at least one electronic device 201 and/or 203 based on a direct (e.g., wired) communication channel and/or a wireless communication channel. The electronic device 101 may communicate with the vehicle 210 and/or the at least one electronic device 201 and/or 203 via a first network 198 (e.g., a short-range communication network such as Bluetooth, wireless fidelity (WiFi) direct, or infrared data association (IrDA)) and/or a second network 199 (e.g., a long-range communication network such as a legacy cellular network, a 5G network, a next-generation communication network, the Internet, or a computer network (e.g., LAN or WAN)).

In an embodiment, the electronic device 101 of FIG. 2 may correspond to the electronic device 101 of FIG. 1.

In an embodiment, the electronic device 101 may include a processor 120, memory 130, a speaker 250, a display 260, a sensor 270, and a communication circuit 290. The processor 120 of FIG. 2 may correspond to the processor 120 of FIG. 1. The memory 130 of FIG. 2 may correspond to the memory 130 of FIG. 1. The speaker 250 of FIG. 2 may correspond to the sound output module 155 of FIG. 1. The display 260 of FIG. 2 may correspond to the display module 160 of FIG. 1. The sensor 270 of FIG. 2 may correspond to the sensor module 176 of FIG. 1. The communication circuit 290 of FIG. 2 may correspond to the communication module 190 of FIG. 1.

In an embodiment, the vehicle 210 may include an electronic device 205. The electronic device 205 may include a processor 225, memory 235, a speaker 255, a display 265, a sensor 275, and a communication circuit 295. The processor 225 of FIG. 2 may correspond to the processor 120 of FIG. 1. The memory 235 of FIG. 2 may correspond to the memory 130 of FIG. 1. The speaker 255 of FIG. 2 may correspond to the sound output module 155 of FIG. 1. The display 265 of FIG. 2 may correspond to the display module 160 of FIG. 1. The sensor 275 of FIG. 2 may correspond to the sensor module 176 of FIG. 1. The communication circuit 295 of FIG. 2 may correspond to the communication module 190 of FIG. 1.

In an embodiment, the at least one electronic device 201 and/or 203 may be a sound output device. For example, the at least one electronic device 201 and/or 203 may be at least one of a headset, an earphone, or an earbud. The at least one electronic device 201 and/or 203 may form a set of earbuds.

In an embodiment, the electronic device 201 may include a processor 221, memory 231, a speaker 251, and a communication circuit 291. The processor 221 of FIG. 2 may correspond to the processor 120 of FIG. 1. The memory 231 of FIG. 2 may correspond to the memory 130 of FIG. 1. The speaker 251 of FIG. 2 may correspond to the sound output module 155 of FIG. 1. The communication circuit 291 of FIG. 2 may correspond to the communication module 190 of FIG. 1.

In an embodiment, the electronic device 203 may include a processor 223, memory 233, a speaker 253, and a communication circuit 293. The processor 223 of FIG. 2 may correspond to the processor 120 of FIG. 1. The memory 233 of FIG. 2 may correspond to the memory 130 of FIG. 1. The speaker 253 of FIG. 2 may correspond to the sound output module 155 of FIG. 1. The communication circuit 293 of FIG. 2 may correspond to the communication module 190 of FIG. 1.

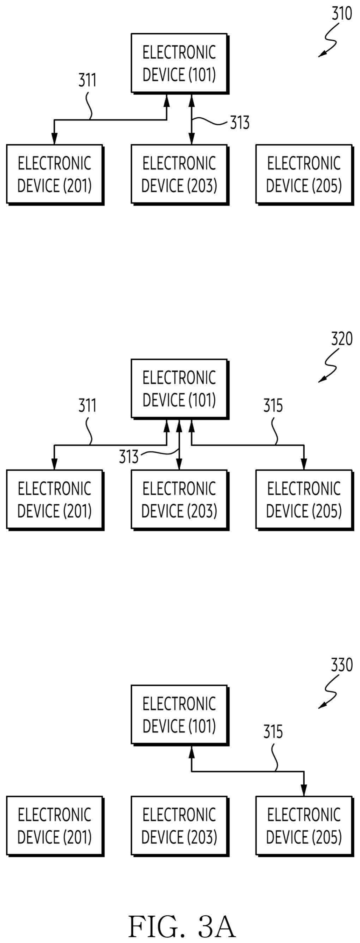

FIG. 3A illustrates an example of communication connections among electronic devices 101, 201, 203, and 205 according to an embodiment.

FIG. 3A may be described with reference to FIGS. 1 and 2.

In an embodiment, situations 310, 320, and 330 of FIG. 3A may indicate communication connections 311, 313, and 315 between an electronic device 101 and other electronic devices 201, 203, and 205. The first situation 310 exemplifies a situation prior to establishing a communication connection between the electronic device 101 and the electronic device 205 of a vehicle 210. The second situation 320 exemplifies a situation after establishing the communication connection between the electronic device 101 and the electronic device 205 of the vehicle 210. The third situation 330 exemplifies a situation after releasing the communication connection between the electronic device 101 and at least one electronic device 201 and/or 203.

In an embodiment, referring to the first situation 310, the electronic device 101 may establish at least one communication connection 311 and/or 313 with the at least one electronic device 201 and/or 203. Herein, the communication connection 311 and/or 313 may be a communication connection based on Bluetooth. For example, the communication connection 311 and 313 may be a communication connection based on low energy (LE) audio. However, it is not limited thereto. For example, the electronic device 101 may establish a communication connection with one electronic device (e.g., the electronic device 201) among the at least one electronic device 201 and/or 203, and may not establish a communication connection with another electronic device (e.g., the electronic device 203). The other electronic device (e.g., the electronic device 203) not connected via communication with the electronic device 101 may sniff the communication connection between the electronic device 101 and the one electronic device (e.g., the electronic device 201). According to an embodiment, the communication connection 311 and/or 313 may be based on Bluetooth low energy (BLE). The communication connection 311 and/or 313 may be based on a communication technique different from Bluetooth. For example, the communication connection 311 and/or 313 may be based on WiFi. The communication connection 311 and/or 313 may be a unidirectional communication connection from the electronic device 101 to the at least one electronic device 201 and/or 203. The communication connection 311 and/or 313 may be a bidirectional communication connection based on a method different from Bluetooth. However, it is not limited thereto.

In an embodiment, in the first situation 310, the electronic device 101 may transmit a media file via the at least one communication connection 311 and/or 313 with the at least one electronic device 201 and/or 203. For example, the electronic device 101 may transmit at least one of an audio file, an image file, or a video file. The electronic device 101 may transmit the media file so that the at least one electronic device 201 and/or 203 outputs a content based on the media file. For example, the electronic devices 201 and/or 203 may output a content based on the media file via at least one speaker 251 and/or 253.

In an embodiment, in the first situation 310, the electronic device 101 may broadcast an advertisement signal (e.g., a pilot signal or a beacon signal). The electronic device 101 may periodically broadcast an advertisement signal to identify at least one other electronic device. However, it is not limited thereto. The electronic device 101 may obtain an advertisement signal (e.g., a pilot signal or a beacon signal) from at least one other electronic device.

In an embodiment, the electronic device 101 may obtain a request for the communication connection 315 from the electronic device 205. The electronic device 101 may obtain a request to establish the communication connection 315 from the electronic device 205. However, it is not limited thereto. The electronic device 101 may request the electronic device 205 to establish the communication connection 315 based on an advertisement signal from the electronic device 205.

In an embodiment, the electronic device 101 may establish the communication connection 315 with the electronic device 205. Herein, the communication connection 315 may be a communication connection based on Bluetooth. For example, the communication connection 315 may be a communication connection based on LE audio. However, it is not limited thereto. The communication connection 315 may be a communication connection based on BLE. The communication connection 315 may be a communication connection based on a communication technique different from Bluetooth. For example, the communication connection 315 may be a communication connection based on WiFi. The communication connection 315 may be a unidirectional communication connection from the electronic device 101 to the vehicle 210. The communication connection 315 may be a bidirectional communication connection based on a method different from Bluetooth.

In an embodiment, in the second situation 320, the electronic device 101 may transmit the media file via the communication connections 311, 313, and 315 with the electronic devices 201, 203, and 205. The electronic device 101 may transmit the media file so that the electronic devices 201, 203, and 205 output a content based on the media file. For example, the electronic device 201 and/or 203 may output a content based on the media file via the at least one speaker 251 and/or 253. For example, the electronic device 205 may output a content based on the media file via at least one speaker 255 and/or a display 265.

In an embodiment, the electronic device 101 may transmit a control signal that gradually increases a size of an audio signal of the content output by the electronic device 205. The electronic device 101 may transmit a control signal that gradually decreases a size of an audio signal of the content output by the at least one electronic device 201 and/or 203. The audio output by the at least one electronic device 201 and/or 203 may be muted. The size of the audio signal output by the at least one electronic device 201 and/or 203 may converge to zero.

In an embodiment, in the third situation 330, the electronic device 101 may transmit the media file via the communication connection 315 with the electronic device 205. The electronic device 101 may cease transmitting the media file to the electronic devices 201 and 203. The electronic device 101 may transmit the media file so that the electronic device 205, rather than the electronic devices 201 and 203, outputs a content based on the media file.

Hereinafter, an operation in which the electronic device 101 processes information of the electronic device 101 is described.

In an embodiment, in the second situation 320 or the third situation 330, the electronic device 101 may obtain a notification. Herein, the notification may include at least one of a notification of a message (e.g., message reception), a notification of a phone application (e.g., call reception), or a push notification of an application (e.g., driving guidance of a navigation application).

For example, in the second situation 320, while transmitting the media file via the communication connections 311, 313, and 315 with the electronic devices 201, 203, and 205, the electronic device 101 may obtain a notification. For example, in the third situation 330, while transmitting the media file via the communication connection 315 with the electronic device 205, the electronic device 101 may obtain a notification.

In an embodiment, the electronic device 101 may output the notification via a device other than the electronic device 205. For example, the electronic device 101 may output the notification via at least one speaker 250 and/or a display 260 of the electronic device 101. For example, the electronic device 101 may output the notification via the at least one speaker 251 and/or 253 of the electronic device 201 and/or 203.

In an embodiment, the electronic device 101 may output the notification via a connection other than the communication connection 315. In the second situation 320, while transmitting the media file via the communication connections 311, 313, and 315 with the electronic devices 201, 203, and 205, the electronic device 101 may output the notification via the at least one communication connection 311 and/or 313 with the at least one electronic device 201 and/or 203. In the third situation 330, while transmitting the media file via the communication connection 315 with the electronic device 205, the electronic device 101 may activate via the at least one communication connection 311 and/or 313 with the at least one electronic device 201 and/or 203. Herein, activation may include establishment of the at least one communication connection 311 and/or 313 via an instant connection request. Activation may include activation of the at least one communication connection 311 and/or 313 in a standby state.

As described above, the electronic device 101 may provide the notification received by the electronic device 101 to a user. The electronic device 101 may avoid disturbing another user of the vehicle 210 by providing the notification received by the electronic device 101 to the user via the electronic device 101 or the at least one electronic device 201 and/or 203. The electronic device 101 may provide information only to the user by providing the notification received by the electronic device 101 to the user via the electronic device 101 or the at least one electronic device 201 and/or 203,.

Hereinafter, an operation in which the electronic device 101 processes information from the electronic device 205 is described.

In an embodiment, the electronic device 205 may identify object information. The electronic device 205 may identify object information while the vehicle 210 is driving. The electronic device 205 may identify object information while power is being supplied from the vehicle 210. The electronic device 205 may identify object information via a sensor 275. The electronic device 205 may identify object information regarding a plurality of selected objects from among all objects located near the vehicle 210. Herein, the object information may be information related to a plurality of objects located in a driving direction of the vehicle 210. For example, the plurality of objects may include an obstacle (e.g., another vehicle, a facility (e.g., a speed bump), a pedestrian, or a sign) located in the driving direction of the vehicle 210.

In an embodiment, the electronic device 205 may identify whether a first communication connection is established. The electronic device 205 may identify whether the first communication connection is established based on identifying the object information. For example, the electronic device 205 may identify whether establishment of the first communication connection is required in order to transmit the object information. For example, in a case in which a communication connection with the electronic device 101 is not established, the electronic device 205 may identify that establishment of the first communication connection is required. For example, in a case in which transmission of the object information via the communication connection 315 with the electronic device 101 is difficult, the electronic device 205 may identify that establishment of the first communication connection is required. For example, in a case in which the communication connection 315 is a unidirectional communication connection from the electronic device 101 to the electronic device 205, the electronic device 205 may identify that establishment of the first communication connection is required.

In an embodiment, based on identifying that establishment of the first communication connection is required, the electronic device 205 may transmit a request for the first communication connection to the electronic device 101. The electronic device 205 may establish the first communication connection based on requesting the electronic device 101 for the first communication connection. Herein, the first communication connection may be distinguished from the communication connection 315 used to receive an audio file. For example, the communication connection 315 used to receive an audio file may be a unidirectional communication connection, and the first communication connection may be a bidirectional communication connection. However, it is not limited thereto. For example, the communication connection 315 may be a communication connection based on LE audio, and the first communication connection may be a bidirectional communication connection based on a different method (e.g., a communication connection based on WiFi, BT, or BLE).

In an embodiment, the electronic device 205 may transmit the object information to the electronic device 101 based on the first communication connection.

In an embodiment, the electronic device 101 may receive the object information via the first communication connection.

In an embodiment, the electronic device 101 may output notification information. The electronic device 101 may output notification information regarding at least one object from among a plurality of objects. The electronic device 101 may output notification information regarding at least one object from among the plurality of objects based on a gaze of the user. For example, the electronic device 101 may output notification information regarding at least one object from among the plurality of objects that the user has not recognized. For example, the electronic device 101 may output notification information regarding at least one object from among the plurality of objects that is out of the gaze. Herein, the user not recognizing an object may mean that the gaze of the user is not directed toward the object after a state of the object has changed. The user not recognizing an object may mean that the gaze of the user identified via a sensor 275 of the vehicle 210 is not directed toward the object. The user not recognizing an object may mean that the gaze of the user identified via a sensor 270 of the electronic device 101 is not directed toward the object. Herein, an object being out of the gaze may mean that the gaze of the user is not directed toward the object after a state of the object has changed. An object being out of the gaze may mean that the gaze of the user identified via the sensor 275 of the vehicle 210 is not directed toward the object. An object being out of the gaze may mean that the gaze of the user identified via the sensor 270 of the electronic device 101 is not directed toward the object.

In an embodiment, the electronic device 101 may output the notification information via the speaker 250. The electronic device 101 may output the notification information via the display 260. The electronic device 101 may output the notification information via the speaker 250 and the display 260.

In an embodiment, the electronic device 101 may output the notification information via the at least one electronic device 201 and/or 203. The electronic device 101 may output the notification information via the at least one speaker 251 and/or 253 of the at least one electronic device 201 and/or 203.

In an embodiment, the electronic device 101 may output the notification information via the electronic device 101 and the at least one electronic device 201 and/or 203. The electronic device 101 may output the notification information via the display 260 of the electronic device 101 and the at least one speaker 251 and/or 253 of the at least one electronic device 201 and/or 203.

In an embodiment, the electronic device 101 may output notification information based on an occupant of the vehicle 210. The electronic device 101 may output notification information based on an occupant other than the user of the electronic device 101. For example, the electronic device 101 may output notification information via the electronic device 101 and/or the at least one electronic device 201 and/or 203 based on presence of another occupant. For example, the electronic device 101 may output notification information via the electronic device 205 based on absence of another occupant. For example, the electronic device 101 may request the electronic device 205 to output the notification information based on absence of another occupant.

As described above, the electronic device 101 may provide the notification to the user based on the object information detected by the electronic device 205. The electronic device 101 may avoid disturbing another user of the vehicle 210 by providing the notification to the user via the electronic device 101 or the at least one electronic device 201 and/or 203 based on the object information detected by the electronic device 205. The electronic device 101 may provide information only to the user by providing the notification to the user via the electronic device 101 or the at least one electronic device 201 and/or 203 based on the object information detected by the electronic device 205.

Hereinafter, an operation in which the electronic device 101 mirrors a stereoscopic image via the electronic device 205 is described.

In an embodiment, a processor 120 may display an image considering binocular disparity via the display 260. Herein, the image considering binocular disparity may include a stereoscopic image. The stereoscopic image may be an image for providing a three-dimensional (3D) spatial sense to the user. Herein, the stereoscopic image may reflect real space. Reflecting real space may mean that at least one object existing in real space may be visible to the user via the display 260 via pass-through. Pass-through may mean an image processing technique in which, while a screen indicating a virtual space is displayed on the display 260, another screen indicating real space obtained via a camera (the camera module 180 of FIG. 1) is superimposed on at least a portion of the screen.

In an embodiment, the electronic device 101 may broadcast an advertisement signal (e.g., a pilot signal or a beacon signal). The electronic device 101 may periodically broadcast an advertisement signal to identify the electronic device 205 of the vehicle 210 while displaying an image considering binocular disparity. However, it is not limited thereto. The electronic device 101 may obtain an advertisement signal (e.g., a pilot signal or a beacon signal) from the electronic device 205 while displaying an image considering binocular disparity.

In an embodiment, the electronic device 101 may establish the communication connection 315 with the electronic device 205. The electronic device 101 may establish the communication connection 315 with the electronic device 205 while displaying an image considering binocular disparity. Herein, the communication connection 315 may be a communication connection based on Bluetooth. For example, the communication connection 315 may be a communication connection based on LE audio. However, it is not limited thereto. The communication connection 315 may be a communication connection based on BLE. The communication connection 315 may be a communication connection based on a communication technique different from Bluetooth. For example, the communication connection 315 may be a communication connection based on WiFi. The communication connection 315 may be a unidirectional communication connection from the electronic device 101 to the vehicle 210. The communication connection 315 may be a bidirectional communication connection based on a method different from Bluetooth.

In an embodiment, the processor 120 may transmit an image to the vehicle 210 via the communication connection 315. The processor 120 may transmit a file related to the image to the vehicle 210 via the communication connection 315 so that the vehicle 210 outputs the image via the display 265. In an embodiment, the image transmitted to the vehicle 210 may be an original image for generating a stereoscopic image in the electronic device 101. In an embodiment, the image transmitted to the vehicle 210 may be a monoscopic image. Herein, the display 265 of the vehicle 210 may be at least one of a digital cluster, a head-up display, or a center information display (CID) of the vehicle 210. However, it is not limited thereto.

In an embodiment, the electronic device 101 may transmit a control signal for the electronic device 205 to display the stereoscopic image more clearly. The electronic device 101 may transmit a control signal for the electronic device 205 to display the stereoscopic image more clearly based on transmitting the stereoscopic image. The electronic device 101 may display the stereoscopic image output by the electronic device 101 more dimly. The electronic device 101 may display the stereoscopic image output by the electronic device 101 more faintly dimly based on transmitting the stereoscopic image.

In an embodiment, the electronic device 101 may cease displaying the stereoscopic image via the electronic device 101. The electronic device 101 may cease displaying the stereoscopic image via the electronic device 101 while the electronic device 205 displays the stereoscopic image. The electronic device 101 may display only a pass-through region reflecting real space via the display 260.

In an embodiment, the electronic device 101 may obtain a notification. The electronic device 101 may obtain a notification while displaying the stereoscopic image via the electronic device 205. Herein, the notification may include at least one of a notification of a message (e.g., message reception), a notification of a phone application (e.g., call reception), or a push notification of an application (e.g., driving guidance of a navigation application). The electronic device 101 may output the notification via a device other than the electronic device 205. For example, the electronic device 101 may output the notification via the at least one speaker 250 and/or the display 260 of the electronic device 101. For example, the electronic device 101 may output the notification via the at least one speaker 251 and/or 253 of the electronic device 201 and/or 203.

In an embodiment, the electronic device 101 may obtain a notification from the electronic device 205. The electronic device 101 may obtain a notification from the electronic device 205 while displaying the stereoscopic image via the electronic device 205. Herein, the notification may include information related to a plurality of objects located in the driving direction of the vehicle 210. For example, the plurality of objects may include an obstacle (e.g., another vehicle, a facility (e.g., a speed bump), a pedestrian, or a sign) located in the driving direction of the vehicle 210. The electronic device 101 may output the notification via at least one electronic device from among the electronic devices 101, 201, 203, and 205. The electronic device 101 may output the notification information via the speaker 250. The electronic device 101 may output the notification information via the display 260. The electronic device 101 may output the notification information via the speaker 250 and the display 260. The electronic device 101 may output the notification information via the at least one electronic device 201 and/or 203. The electronic device 101 may output the notification information via the at least one speaker 251 and/or 253 of the at least one electronic device 201 and/or 203. For example, the electronic device 101 may output notification information via the electronic device 205 based on absence of another occupant. For example, the electronic device 101 may request the electronic device 205 to output the notification information based on absence of another occupant.

As described above, the electronic device 101 may provide the notification received by the electronic device 101 to the user. The electronic device 101 may avoid disturbing another user of the vehicle 210 by providing the notification received by the electronic device 101 to the user via the electronic device 101 or the at least one electronic device 201 and/or 203. The electronic device 101 may provide information only to the user by providing the notification received by the electronic device 101 to the user via the electronic device 101 or the at least one electronic device 201 and/or 203.

As described above, the electronic device 101 has been exemplified as displaying a stereoscopic image via the display 260, but this is only an example. The electronic device 101 according to an embodiment may display a stereoscopic image via the electronic device 201 and/or 203. For example, the electronic device 201 and/or 203 may form a wearable device capable of displaying a stereoscopic image. In this case, the electronic device 101 may display a stereoscopic image via the electronic device 201 and/or 203. Thereafter, based on being connected via communication with the electronic device 205, the electronic device 101 may display the stereoscopic image displayed via the electronic device 201 and/or 203 via the electronic device 205.

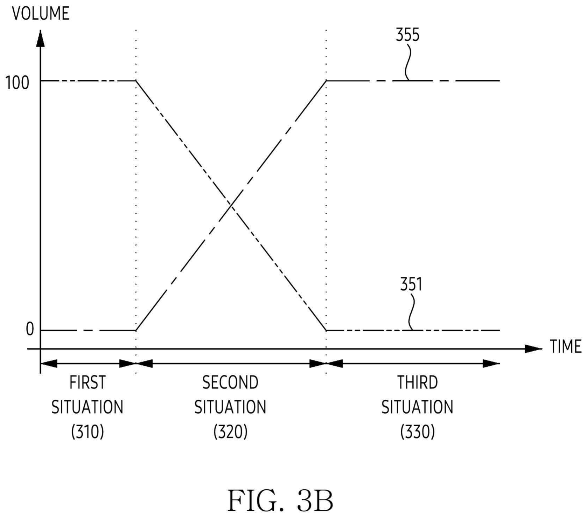

Hereinafter, with reference to FIG. 3B, an operation in which the electronic device 101 adjusts volume may be described.

FIG. 3B illustrates an example of volume adjustment between electronic devices 101, 201, 203, and 205 according to an embodiment.

FIG. 3B may be described with reference to FIG. 1, FIG. 2, and FIG. 3A.

In an embodiment, a volume 351 may mean a size of an audio signal output via at least one electronic device 201 and/or 203. A volume 355 may mean a size of an audio signal output via an electronic device 205.

In an embodiment, in a first situation 310, the electronic device 201 and/or 203 may output a content based on a media file via at least one speaker 251 and/or 253. The electronic device 205 may not output a content based on a media file via a speaker 255.

In an embodiment, in a second situation 320, the electronic devices 201, 203, and 205 may output a content based on the media file via the speakers 251, 253, and 255. A size of an audio signal of a content output by the electronic device 205 may gradually increase. A size of an audio signal of the content output by the at least one electronic device 201 and/or 203 may gradually decrease. The audio of the content output by the at least one electronic device 201 and/or 203 may be muted. The size of the audio signal of the content output by the at least one electronic device 201 and/or 203 may converge to zero.

In an embodiment, in a third situation 330, the electronic device 205 may output a content based on the media file via the speaker 255. The electronic device 201 and/or 203 may not output a content based on the media file via the at least one speaker 251 and/or 253.

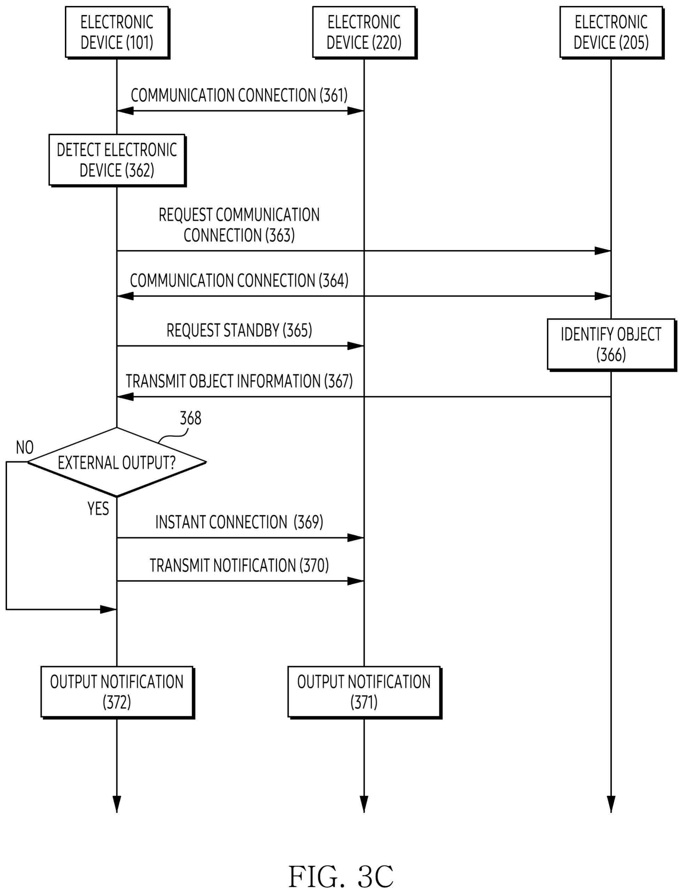

FIG. 3C illustrates an example of a sequence of a communication connection between electronic devices 101, 201, 203, and 205 according to an embodiment.

FIG. 3C may be described with reference to FIG. 1, FIG. 2, and FIG. 3A.

In the following embodiment, each operation may be performed sequentially, but is not necessarily performed sequentially. For example, an order of the operations may be changed, and at least two operations may be performed in parallel.

According to an embodiment, operations 361 to 372 may be understood as being performed in each processor 120, 221, 223, and 225 of the electronic devices 101, 201, 203, and 205.

In an embodiment, an electronic device 220 of FIG. 3C may mean a set of the electronic devices 201 and 203. For example, an operation performed by the electronic device 101 with respect to the electronic device 220 may mean performing the operation with respect to each of the electronic devices 201 and 203. For example, an operation performed by the electronic device 101 with respect to the electronic device 220 may mean performing the operation with respect to at least one of the electronic devices 201 and 203.

In an embodiment, with reference to FIG. 3C, in operation 361, the electronic device 101 and the electronic device 220 may establish a communication connection. For example, the electronic device 101 may establish at least one communication connection 311 and/or 313 with the at least one electronic device 201 and/or 203.

In an embodiment, in operation 362, the electronic device 101 may detect the electronic device 205. For example, the electronic device 101 may detect the electronic device 205 based on broadcasting an advertisement signal (e.g., a pilot signal or a beacon signal). The electronic device 101 may detect the electronic device 205 based on receiving an advertisement signal from the electronic device 205.

In an embodiment, in operation 363, the electronic device 101 may request the electronic device 205 to establish a communication connection. However, it is not limited thereto. The electronic device 205 may request the electronic device 101 to establish a communication connection.

In an embodiment, in operation 364, the electronic device 101 and the electronic device 205 may establish the communication connection. Herein, the communication connection between the electronic device 101 and the electronic device 205 may be a bidirectional communication connection. For example, the communication connection between the electronic device 101 and the electronic device 205 may be a communication connection based on at least one of LE audio, Bluetooth, BLE, or WiFi. However, it is not limited thereto.

In an embodiment, in operation 365, the electronic device 101 may request the electronic device 220 to be on standby. Standby of the electronic device 220 may mean that the communication connection between the electronic device 101 and the electronic device 220 is deactivated. Deactivation of the communication connection may mean that only a signal for maintaining the communication connection (e.g., a pilot signal) is transmitted and received.

In an embodiment, in operation 366, the electronic device 205 may identify an object. The electronic device 205 may identify an object while a vehicle 210 is driving. The electronic device 205 may identify an object while power is being supplied from the vehicle 210. The electronic device 205 may identify an object via a sensor 275. The electronic device 205 may identify a plurality of selected objects from among all objects located near the vehicle 210. Herein, the plurality of objects may include an obstacle (e.g., another vehicle, a facility (e.g., a speed bump), a pedestrian, or a sign) located in a driving direction of the vehicle 210.

In an embodiment, in operation 367, the electronic device 205 may transmit object information to the electronic device 101 based on the communication connection between the electronic device 101 and the electronic device 205.

In an embodiment, in operation 368, the electronic device 101 may determine whether to output the object information externally.

In an embodiment, the electronic device 101 may determine whether to output the object information via the at least one electronic device 201 and/or 203 based on whether the at least one electronic device 201 and/or 203 is worn. In a case in which the at least one electronic device 201 and/or 203 is worn by a user, the electronic device 101 may determine to output the object information via the at least one electronic device 201 and/or 203. In a case in which the at least one electronic device 201 and/or 203 is not worn by the user, the electronic device 101 may determine to output the object information via the electronic device 101.

In an embodiment, the electronic device 101 may determine whether to output the object information externally based on an occupant of the vehicle 210. The electronic device 101 may determine whether to output the object information externally based on an occupant other than the user of the electronic device 101. For example, the electronic device 101 may output notification information via the at least one electronic device 201 and/or 203 based on presence of another occupant. For example, the electronic device 101 may output notification information via the electronic device 101 based on absence of another occupant. However, it is not limited thereto. For example, the electronic device 101 may request the electronic device 205 to output the notification information based on absence of another occupant.

In an embodiment, in operation 369, the electronic device 101 may request the electronic device 220 for an instant connection. The electronic device 101 may activate the communication connection with the electronic device 220. Herein, activation may include establishment of at least one communication connection via an instant connection request for the electronic device 201 and/or 203. Activation may include activation of the at least one communication connection in a standby state.

In an embodiment, in operation 370, the electronic device 101 may transmit a notification to the at least one electronic device 201 and/or 203. The electronic device 101 may transmit notification information regarding the object to the at least one electronic device 201 and/or 203.

In an embodiment, in operation 371, the electronic device 220 may output the notification information. The at least one electronic device 201 and/or 203 may output the notification information via at least one speaker 251 and/or 253.

In an embodiment, in operation 372, the electronic device 101 may output the notification information. The electronic device 101 may output notification information via a speaker 250. The electronic device 101 may output the notification information via a display 260. The electronic device 101 may output notification information via the speaker 250 and the display 260.

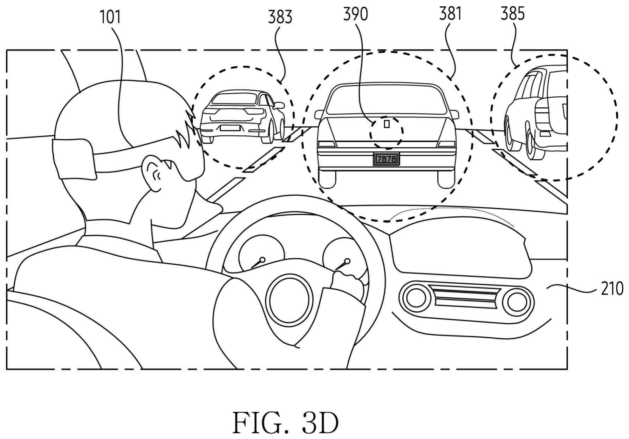

FIG. 3D illustrates an example of a driving situation of a vehicle 210 according to an embodiment.

In an embodiment, referring to FIG. 3D, a user may look outside the vehicle 210 via a windshield of the vehicle 210. Near the vehicle 210, at least one object 381, 383, and/or 385 may be included.

In an embodiment, the electronic device 101 and/or the electronic device 205 of the vehicle 210 may identify a gaze 390 of the user.

In an embodiment, the electronic device 101 may identify the gaze 390 of the user via a sensor 270. In this case, the electronic device 205 may transmit information related to a plurality of selected objects 381, 383, and 385 from among all objects located near the vehicle 210 to the electronic device 101. For example, the electronic device 205 may transmit information related to the plurality of objects 381, 383, and 385 located in a driving direction of the vehicle 210 to the electronic device 101. The electronic device 101 may output a notification regarding at least one object based on the information related to the plurality of objects 381, 383, and 385 from the electronic device 205. For example, the electronic device 101 may output a notification regarding at least one object from among the plurality of objects 381, 383, 385 toward which the gaze 390 is not directed. For example, the electronic device 101 may output notification information regarding at least one object (e.g., objects 383 and 385) from among the plurality of objects 381, 383, and 385 that the user has not recognized. For example, the electronic device 101 may output notification information regarding at least one object (e.g., the objects 383 and 385) from among the plurality of objects 381, 383, and 385 that is out of the gaze 390. Herein, the user not recognizing an object may mean that the gaze 390 of the user is not directed toward the object after a state of the object has changed. The user not recognizing an object may mean that the gaze 390 of the user identified via a sensor 275 of the vehicle 210 is not directed toward the object. Herein, an object being out of the gaze 390 may mean that the gaze 390 of the user is not directed toward the object after a state of the object has changed. An object being out of the gaze 390 may mean that the gaze 390 of the user identified via the sensor 275 of the vehicle 210 is not directed toward the object.

In an embodiment, the electronic device 205 may identify the gaze 390 of the user via the sensor 275. In this case, the electronic device 205 may provide information to the electronic device 101 regarding at least one object (e.g., the objects 383 and 385) from among the plurality of objects 381, 383, and 385 located near the vehicle 210 toward which the gaze 390 is not directed.

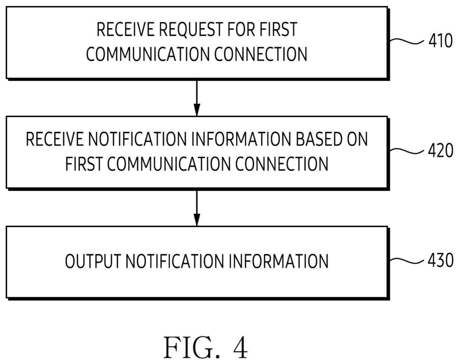

FIG. 4 is a flowchart indicating an operation of an electronic device according to an embodiment.

FIG. 4 may be described with reference to FIGS. 1 and 2.

In the following embodiment, each operation may be performed sequentially, but is not necessarily performed sequentially. For example, an order of the operations may be changed, and at least two operations may be performed in parallel.

According to an embodiment, operations 410 to 430 may be understood as being performed in a processor (e.g., the processor 120 of FIG. 2) of an electronic device (e.g., the electronic device 101 of FIG. 2).

In an embodiment, referring to FIG. 4, in operation 410, the processor 120 may receive a request for a first communication connection. The processor 120 may receive the request for the first communication connection from an electronic device 205 of a vehicle 210. Herein, the first communication connection may be a communication connection based on Bluetooth. For example, the first communication connection may be a communication connection based on low energy (LE) audio. However, it is not limited thereto. The first communication connection may be a communication connection based on Bluetooth low energy (BLE). The first communication connection may be a communication connection based on a communication technique different from Bluetooth. For example, the first communication connection may be a communication connection based on WiFi. The first communication connection may be a unidirectional communication connection from the vehicle 210 to the electronic device 101. The first communication connection may be a bidirectional communication connection based on a method different from Bluetooth.

In an embodiment, the processor 120 may establish the first communication connection. The processor 120 may establish the first communication connection in response to the request for the first communication connection from the electronic device 205 of the vehicle 210. Based on the request for the first communication connection from the electronic device 205 of the vehicle 210, the first communication connection with the vehicle 210 may be established.

In an embodiment, in operation 420, the processor 120 may receive notification information based on the first communication connection. Herein, the notification information may be information generated by the vehicle 210. The notification information may be information obtained via a sensor 275 of the vehicle 210. The notification information may be information related to a plurality of selected objects 381, 383, and 385 from among all objects located near the vehicle 210. For example, the notification information may be information related to the plurality of objects 381, 383, and 385 located in a driving direction of the vehicle 210. For example, the plurality of objects 381, 383, and 385 may include an obstacle (e.g., another vehicle, a facility (e.g., a speed bump), a pedestrian, or a sign) located in the driving direction of the vehicle 210.

In an embodiment, in operation 430, the processor 120 may output notification information. The processor 120 may output notification information regarding at least one object from among the plurality of objects 381, 383, and 385. The processor 120 may output notification information regarding at least one object from among the plurality of objects 381, 383, and 385 based on a gaze 390 of a user. For example, the processor 120 may output notification information regarding at least one object from among the plurality of objects 381, 383, and 385 that the user has not recognized. For example, the processor 120 may output notification information regarding at least one object from among the plurality of objects 381, 383, and 385 that is out of the gaze 390. Herein, the user not recognizing an object may mean that the gaze 390 of the user is not directed toward the object after a state of the object has changed. The user not recognizing an object may mean that the gaze 390 of the user identified via the sensor 275 of the vehicle 210 is not directed toward the object. Herein, an object being out of the gaze 390 may mean that the gaze 390 of the user is not directed toward the object after a state of the object has changed. An object being out of the gaze 390 may mean that the gaze 390 of the user identified via the sensor 275 of the vehicle 210 is not directed toward the object.

In an embodiment, the processor 120 may output the notification information via a speaker 250. The processor 120 may output the notification information via a display 260. The processor 120 may output the notification information via the speaker 250 and the display 260.

In an embodiment, the processor 120 may output the notification information via at least one electronic device 201 and/or 203. The processor 120 may output the notification information via at least one speaker 251 and/or 253 of the at least one electronic device 201 and/or 203.

In an embodiment, the processor 120 may output the notification information via the electronic device 101 and the at least one electronic device 201 and/or 203. The processor 120 may output the notification information via the display 260 of the electronic device 101 and the at least one speaker 251 and/or 253 of the at least one electronic device 201 and/or 203.

In an embodiment, the processor 120 may output notification information based on an occupant of the vehicle 210. The processor 120 may output notification information based on an occupant other than the user of the electronic device 101. For example, the processor 120 may output notification information via the electronic device 101 and/or the at least one electronic device 201 and/or 203 based on absence of another occupant. For example, the processor 120 may output notification information via the electronic device 205 based on presence of another occupant. For example, the processor 120 may request the electronic device 205 to output the notification information based on absence of another occupant.

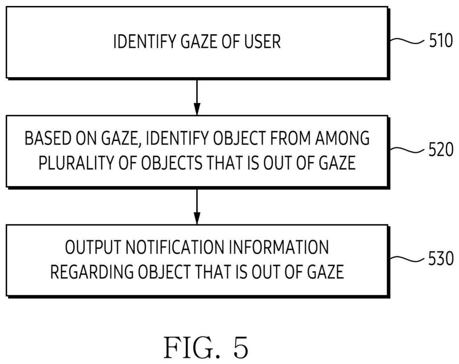

FIG. 5 is a flowchart indicating an operation of an electronic device according to an embodiment.

FIG. 5 may be described with reference to FIGS. 1 and 2. For example, operations of FIG. 5 may be included in the operation 430 of FIG. 4. For example, the operations of FIG. 5 may be performed after the operation 420 of FIG. 4. However, it is not limited thereto.

In the following embodiment, each operation may be performed sequentially, but is not necessarily performed sequentially. For example, an order of the operations may be changed, and at least two operations may be performed in parallel.

According to an embodiment, operations 510 to 530 may be understood as being performed in a processor (e.g., the processor 120 of FIG. 2) of an electronic device (e.g., the electronic device 101 of FIG. 2).

In an embodiment, referring to FIG. 5, in operation 510, the processor 120 may identify a gaze 390 of a user. The processor 120 may identify the gaze 390 of the user via a sensor 270.

In an embodiment, in operation 520, the processor 120 may identify an object that is out of the gaze 390 from among a plurality of objects 381, 383, and 385, based on the gaze 390. Herein, an object being out of gaze 390 may mean that the gaze 390 of the user is not directed toward the object after a state of the object has changed. An object being out of the gaze 390 may mean that the gaze 390 of the user identified via a sensor 275 of a vehicle 210 is not directed toward the object.

In an embodiment, in operation 530, the processor 120 may output notification information regarding the object that is out of the gaze 390. For example, the processor 120 may output notification information regarding at least one object from among the plurality of objects 381, 383, and 385 that is out of the gaze 390. For example, the processor 120 may output notification information regarding at least one object that is out of the gaze 390 from among the plurality of objects 381, 383, and 385 located in a driving direction. For example, the processor 120 may output notification information regarding at least one object that is out of the gaze 390 from among the plurality of objects 381, 383, and 385 having a probability of collision with the vehicle 210. Herein, the probability of collision may be calculated based on at least one of a driving direction, a driving speed, a driving acceleration of the vehicle 210, a relative position of the object, a movement direction, a movement speed, or a movement acceleration of the object. Herein, the probability of collision may be calculated based on at least one of a relative distance, a relative speed, or a relative acceleration between the vehicle 210 and the object.

In an embodiment, the processor 120 may output the notification information regarding the object that is out of the gaze 390 via a speaker 250 and/or a display 260. The processor 120 may output the notification information regarding the object that is out of the gaze 390 via at least one electronic device 201 and/or 203. The processor 120 may output the notification information regarding the object that is out of the gaze 390 via the electronic device 101 and/or the at least one electronic device 201 and/or 203.

In an embodiment, the processor 120 may output notification information regarding the object that is out of the gaze 390 based on an occupant of the vehicle 210. For example, the processor 120 may output notification information regarding the object that is out of the gaze 390 via the electronic device 101 and/or the at least one electronic device 201 and/or 203 based on absence of another occupant. For example, the processor 120 may output notification information regarding the object that is out of the gaze 390 via an electronic device 205 based on presence of another occupant.

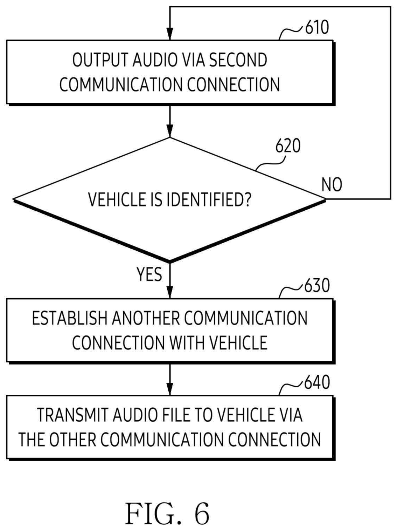

FIG. 6 is a flowchart indicating an operation of an electronic device according to an embodiment.

FIG. 6 may be described with reference to FIGS. 1 and 2. For example, operations of FIG. 6 may be performed before the operation 410 of FIG. 4. However, it is not limited thereto.

In the following embodiment, each operation may be performed sequentially, but is not necessarily performed sequentially. For example, an order of the operations may be changed, and at least two operations may be performed in parallel.

According to an embodiment, operations 610 to 640 may be understood as being performed in a processor (e.g., the processor 120 of FIG. 2) of an electronic device (e.g., the electronic device 101 of FIG. 2).

In an embodiment, referring to FIG. 6, in operation 610, the processor 120 may output audio via a second communication connection. The processor 120 may output audio via at least one electronic device 201 and/or 203 based on the second communication connection. The processor 120 may output audio based on the second communication connection with each of the electronic devices 201 and/or 203. However, it is not limited thereto. The processor 120 may output audio based on the second communication connection with one electronic device (e.g., the electronic device 201). Another electronic device (e.g., the electronic device 203) may output audio by sniffing the second communication connection. Herein, the second communication connection may be a communication connection based on Bluetooth. For example, the second communication connection may be a communication connection based on LE audio. However, it is not limited thereto. The second communication connection may be a communication connection based on BLE. The second communication connection may be a communication connection based on a communication technique different from Bluetooth. For example, the second communication connection may be a communication connection based on WiFi. The second communication connection may be a unidirectional communication connection from the electronic device 101 to the at least one electronic device 201 and/or 203. The second communication connection may be a bidirectional communication connection based on a method different from Bluetooth.

In an embodiment, the processor 120 may transmit an audio file to the at least one electronic device 201 and/or 203 via the second communication connection so that the at least one electronic device 201 and/or 203 outputs the audio.

In an embodiment, in operation 620, the processor 120 may determine whether a vehicle 210 is identified. The processor 120 may determine whether the vehicle 210 is identified based on a signal (e.g., an advertisement signal) based on a designated communication technique. For example, the processor 120 may determine whether the vehicle 210 is identified based on a response from the vehicle 210 to the signal (e.g., the advertisement signal) based on the designated communication technique.

In an embodiment, in the operation 620, in a case in which the vehicle 210 is identified, the processor 120 may perform operation 630. In the operation 620, in a case in which the vehicle 210 is not identified, the processor 120 may perform the operation 610 again.

In an embodiment, in the operation 630, the processor 120 may establish another communication connection with the vehicle 210. The processor 120 may establish the other communication connection with the vehicle 210 based on the designated communication technique.

In an embodiment, in operation 640, the processor 120 may transmit an audio file to the vehicle 210 via the other communication connection. The processor 120 may transmit the audio file to the vehicle 210 via the other communication connection so that the vehicle 210 outputs audio.

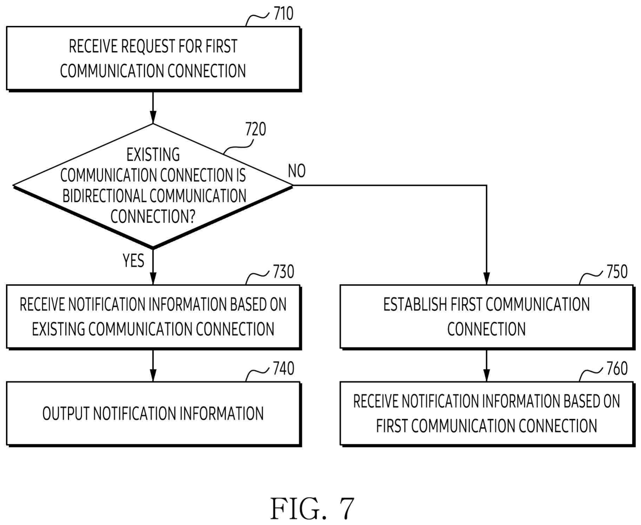

FIG. 7 is a flowchart indicating an operation of an electronic device according to an embodiment.

FIG. 7 may be described with reference to FIGS. 1 and 2.

In the following embodiment, each operation may be performed sequentially, but is not necessarily performed sequentially. For example, an order of the operations may be changed, and at least two operations may be performed in parallel.

According to an embodiment, operations 710 to 760 may be understood as being performed in a processor (e.g., the processor 120 of FIG. 2) of an electronic device (e.g., the electronic device 101 of FIG. 2).

In an embodiment, referring to FIG. 7, in operation 710, the processor 120 may receive a request for a first communication connection. The processor 120 may receive the request for the first communication connection from an electronic device 205 of a vehicle 210. Herein, the first communication connection may be a communication connection based on Bluetooth. For example, the first communication connection may be a communication connection based on LE audio. However, it is not limited thereto. The first communication connection may be a communication connection based on BLE. The first communication connection may be a communication connection based on a communication technique different from Bluetooth. For example, the first communication connection may be a communication connection based on WiFi. The first communication connection may be a unidirectional communication connection from the vehicle 210 to the electronic device 101. The first communication connection may be a bidirectional communication connection based on a method different from Bluetooth.

In an embodiment, in operation 720, the processor 120 may determine whether an existing communication connection is a bidirectional communication connection. The processor 120 may determine whether the existing communication connection with the vehicle 210 is a bidirectional communication connection. The processor 120 may determine whether the existing communication connection for transmitting a media file (e.g., an audio file) to the vehicle 210 is a bidirectional communication connection.

In an embodiment, in the operation 720, in a case in which the existing communication connection is a bidirectional communication connection, the processor 120 may perform operation 730. In the operation 720, in a case in which the existing communication connection is not a bidirectional communication connection, the processor 120 may perform operation 750. In the operation 720, in a case in which the existing communication connection is a unidirectional communication connection, the processor 120 may perform the operation 750. Herein, the unidirectional communication connection may be a communication connection from the electronic device 101 to the vehicle 210.

In an embodiment, in the operation 730, the processor 120 may receive notification information based on the existing communication connection. Herein, the notification information may be information generated by the vehicle 210. The notification information may be information obtained via a sensor 275 of the vehicle 210. The notification information may be information related to a plurality of selected objects 381, 383, and 385 from among all objects located near the vehicle 210. For example, the notification information may be information related to the plurality of objects 381, 383, and 385 located in a driving direction of the vehicle 210. For example, the plurality of objects 381, 383, and 385 may include an obstacle (e.g., another vehicle, a facility (e.g., a speed bump), a pedestrian, or a sign) located in the driving direction of the vehicle 210.

In an embodiment, in operation 740, the processor 120 may output notification information. The processor 120 may output notification information regarding at least one object from among the plurality of objects 381, 383, and 385. The processor 120 may output notification information regarding at least one object from among the plurality of objects 381, 383, and 385 based on a gaze 390 of a user. For example, the processor 120 may output notification information regarding at least one object from among the plurality of objects 381, 383, and 385 that the user has not recognized. For example, the processor 120 may output notification information regarding at least one object from among the plurality of objects 381, 383, and 385 that is out of the gaze 390. Herein, the user not recognizing an object may mean that the gaze 390 of the user is not directed toward the object after a state of the object has changed. The user not recognizing an object may mean that the gaze 390 of the user identified via the sensor 275 of the vehicle 210 is not directed toward the object. Herein, an object being out of the gaze 390 may mean that the gaze 390 of the user is not directed toward the object after a state of the object has changed. An object being out of the gaze 390 may mean that the gaze 390 of the user identified via the sensor 275 of the vehicle 210 is not directed toward the object.

In an embodiment, the processor 120 may output the notification information via a speaker 250. The processor 120 may output the notification information via a display 260. The processor 120 may output the notification information via the speaker 250 and the display 260.

In an embodiment, the processor 120 may output the notification information via at least one electronic device 201 and/or 203. The processor 120 may output the notification information via at least one speaker 251 and/or 253 of the at least one electronic device 201 and/or 203.

In an embodiment, the processor 120 may output the notification information via the electronic device 101 and the at least one electronic device 201 and/or 203. The processor 120 may output the notification information via the display 260 of the electronic device 101 and the at least one speaker 251 and/or 253 of the at least one electronic device 201 and/or 203.

In an embodiment, the processor 120 may output notification information based on an occupant of the vehicle 210. The processor 120 may output notification information based on an occupant other than the user of the electronic device 101. For example, the processor 120 may output notification information via the electronic device 101 and/or the at least one electronic device 201 and/or 203 based on absence of another occupant. For example, the processor 120 may output notification information via the electronic device 205 based on presence of another occupant. For example, the processor 120 may request the electronic device 205 to output the notification information based on presence of another occupant.

In an embodiment, in the operation 750, the processor 120 may establish the first communication connection. The processor 120 may establish the first communication connection in response to the request for the first communication connection from the electronic device 205 of the vehicle 210. Based on the request for the first communication connection from the electronic device 205 of the vehicle 210, the first communication connection with the vehicle 210 may be established.

In an embodiment, the processor 120 may release an existing communication connection based on establishing the first communication connection. According to an embodiment, the processor 120 may switch the existing communication connection to the first communication connection. Herein, switching the existing communication connection to the first communication connection may mean releasing the existing communication connection and establishing the first communication connection.

In an embodiment, in operation 760, the processor 120 may receive notification information based on the first communication connection. Thereafter, the processor 120 may output the notification information received based on the first communication connection.

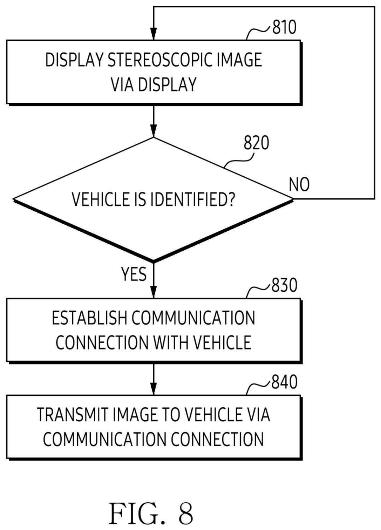

FIG. 8 is a flowchart indicating an operation of an electronic device according to an embodiment.

FIG. 8 may be described with reference to FIGS. 1 and 2.

In the following embodiment, each operation may be performed sequentially, but is not necessarily performed sequentially. For example, an order of the operations may be changed, and at least two operations may be performed in parallel.

According to an embodiment, operations 810 to 840 may be understood as being performed in a processor (e.g., the processor 120 of FIG. 2) of an electronic device (e.g., the electronic device 101 of FIG. 2).

In an embodiment, the electronic device 101 performing operations of FIG. 8 may be a device that may be worn by a user. For example, the electronic device 101 may provide augmented reality (AR), virtual reality (VR), or mixed reality (MR), which is a combination of augmented reality and virtual reality, to the user wearing the device.

In an embodiment, referring to FIG. 8, in operation 810, the processor 120 may display a stereoscopic image via a display 260. The stereoscopic image may be an image considering binocular disparity of the user. The stereoscopic image may be an image for providing a three-dimensional (3D) spatial sense to the user. Herein, the stereoscopic image may reflect real space. Reflecting real space may mean that at least one object existing in real space may be visible to the user via the display 260 via pass-through. Pass-through may mean an image processing technique in which, while a screen indicating a virtual space is displayed on the display 260, another screen indicating real space obtained via a camera (the camera module 180 of FIG. 1) is superimposed on at least a portion of the screen.

In an embodiment, in operation 820, the processor 120 may determine whether a vehicle 210 is identified. The processor 120 may determine whether the vehicle 210 is identified based on a signal (e.g., an advertisement signal) based on a designated communication technique. For example, the processor 120 may determine whether the vehicle 210 is identified based on a response from the vehicle 210 to the signal (e.g., the advertisement signal) based on the designated communication technique.

In an embodiment, in the operation 820, in a case in which the vehicle 210 is identified, the processor 120 may perform operation 830. In the operation 820, in a case in which the vehicle 210 is not identified, the processor 120 may perform the operation 810 again.

In an embodiment, in the operation 830, the processor 120 may establish a communication connection with the vehicle 210. The processor 120 may establish the communication connection with the vehicle 210 based on the designated communication technique. Herein, the communication connection may be a communication connection based on Bluetooth. For example, the communication connection may be a communication connection based on LE audio. However, it is not limited thereto. The communication connection may be a communication connection based on BLE. The communication connection may be a communication connection based on a communication technique different from Bluetooth. For example, the communication connection may be a communication connection based on WiFi. The communication connection may be a unidirectional communication connection from the electronic device 101 to at least one electronic device 201 and/or 203. The communication connection may be a bidirectional communication connection based on a method different from Bluetooth.

In an embodiment, in operation 840, the processor 120 may transmit an image to the vehicle 210 via the communication connection. The processor 120 may transmit a file related to the image to the vehicle 210 via another communication connection so that the vehicle 210 outputs the image via a display 265. In an embodiment, the image transmitted to the vehicle 210 may be an original image for generating a stereoscopic image in the electronic device 101. In an embodiment, the image transmitted to the vehicle 210 may be a monoscopic image. Herein, the display 265 of the vehicle 210 may be at least one of a digital cluster, a head-up display, or a center information display (CID) of the vehicle 210. However, it is not limited thereto.

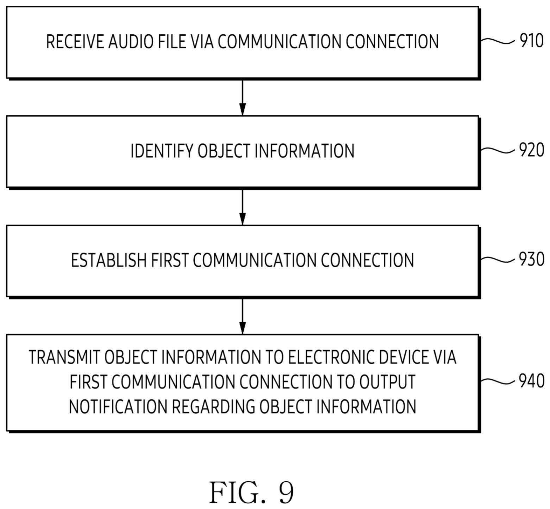

FIG. 9 is a flowchart indicating an operation of an electronic device 205 according to an embodiment.

FIG. 9 may be described with reference to FIGS. 1 and 2.

In the following embodiment, each operation may be performed sequentially, but is not necessarily performed sequentially. For example, an order of the operations may be changed, and at least two operations may be performed in parallel.

According to an embodiment, operations 910 to 940 may be understood as being performed in a processor (e.g., the processor 225 of FIG. 2) of an electronic device (e.g., the electronic device 205 of FIG. 2) of a vehicle 210.

In an embodiment, referring to FIG. 9, in operation 910, the processor 225 may receive an audio file via a communication connection. For example, the processor 225 may receive an audio file via a communication connection with an electronic device 101. Herein, receiving the audio file by the processor 225 may include continuously receiving portions of the audio file from the electronic device 101. For example, receiving the audio file by the processor 225 may include obtaining audio data streamed from the electronic device 101.

The processor 225 may output audio based on the received audio file. The processor 225 may output the audio via a speaker 255 based on the received audio file. However, it is not limited thereto. For example, the processor 225 may receive a multimedia file (e.g., an image file or a video file) via the communication connection. The processor 225 may output a content related to the multimedia file via the speaker 255 and/or a display 265 based on the received multimedia file.

In an embodiment, in operation 920, the processor 225 may identify object information. The processor 225 may identify the object information via a sensor 275. The processor 225 may identify object information regarding a plurality of selected objects 381, 383, and 385 from among all objects located near the vehicle 210. Herein, the object information may be information related to the plurality of objects 381, 383, and 385 located in a driving direction of the vehicle 210. For example, the plurality of objects 381, 383, and 385 may include an obstacle (e.g., another vehicle, a facility (e.g., a speed bump), a pedestrian, or a sign) located in the driving direction of the vehicle 210.

In an embodiment, in operation 930, the processor 225 may establish a first communication connection. The processor 225 may transmit a request for the first communication connection to the electronic device 101. The processor 225 may establish the first communication connection based on requesting the electronic device 101 for the first communication connection. Herein, the first communication connection may be distinguished from the communication connection used to receive the audio file. For example, the first communication connection may be distinguished from the communication connection used to continuously receive portions of the audio file from the electronic device 101. For example, the first communication connection may be distinguished from the communication connection used by the processor 225 to receive audio data streamed from the electronic device 101. For example, the communication connection used to receive the audio file (e.g., a second communication connection) may be a unidirectional communication connection, and the first communication connection may be a bidirectional communication connection. The communication connection used to receive the audio file (e.g., the second communication connection) may be a communication connection based on LE audio. The communication connection used to receive the audio file (e.g., the second communication connection) may be a unidirectional communication connection from the electronic device 101 to the vehicle 210.

In an embodiment, in operation 940, the processor 225 may transmit the object information to the electronic device 101 via the first communication connection to output a notification regarding the object information.

In an embodiment, the processor 225 may transmit object information regarding at least one object from among the plurality of objects 381, 383, and 385 to the electronic device 101. The processor 225 may transmit object information regarding at least one object from among the plurality of objects 381, 383, and 385 to the electronic device 101, based on a gaze 390 of a user. For example, the processor 225 may transmit object information regarding at least one object from among the plurality of objects 381, 383, and 385 that the user has not recognized to the electronic device 101. For example, the processor 225 may transmit object information regarding at least one object from among the plurality of objects 381, 383, and 385 that is out of the gaze 390 to the electronic device 101. Herein, the user not recognizing an object may mean that the gaze 390 of the user is not directed toward the object after a state of the object has changed. The user not recognizing an object may mean that the gaze 390 of the user identified via the sensor 275 of the vehicle 210 is not directed toward the object. Herein, an object being out of the gaze 390 may mean that the gaze 390 of the user is not directed toward the object after a state of the object has changed. An object being out of the gaze 390 may mean that the gaze 390 of the user identified via the sensor 275 of the vehicle 210 is not directed toward the object.

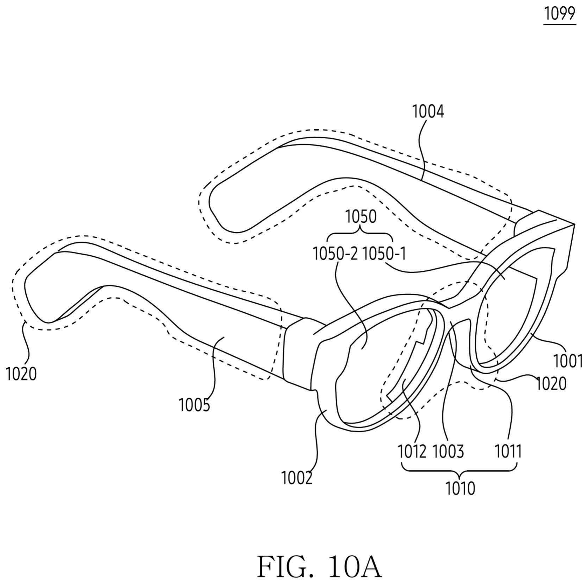

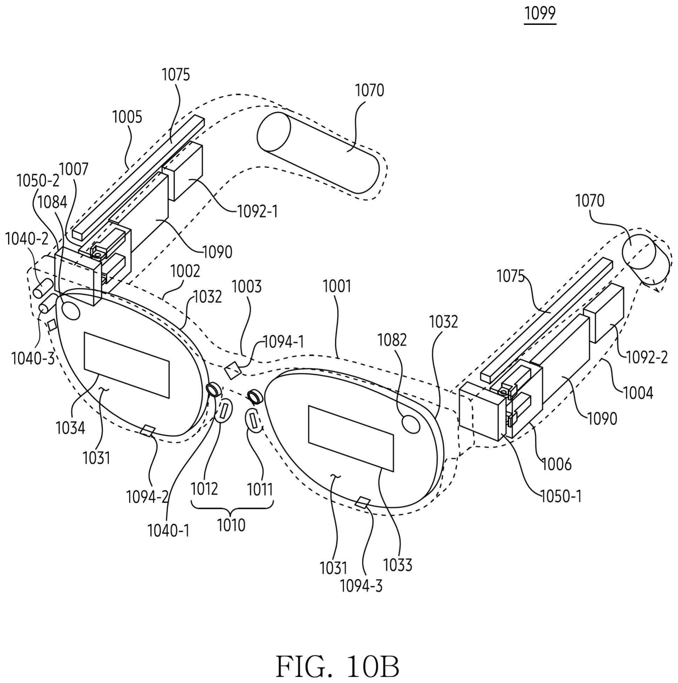

FIG. 10A illustrates an example of a perspective view of a wearable device 1099 according to an embodiment. FIG. 10B illustrates an example of one or more hardware disposed in a wearable device 1099 according to an embodiment. The wearable device 1099 of FIG. 10A to FIG. 10B may correspond to the electronic device 101 of FIG. 1. As shown in FIG. 10A, according to an embodiment, the wearable device 1099 may include at least one display 1050 and a frame supporting the at least one display 1050.

According to an embodiment, the wearable device 1099 may be wearable on a portion of the user's body. The wearable device 1099 may provide augmented reality (AR), virtual reality (VR), or mixed reality (MR) combining the augmented reality and the virtual reality to a user wearing the wearable device 1099. For example, the wearable device 1099 may output, to a user, a virtual reality image via at least one display 1050, in response to a user's preset gesture obtained through a motion recognition camera 1040-2 of FIG. 10B.

According to an embodiment, the at least one display 1050 in the wearable device 1099 may provide visual information to a user. For example, the at least one display 1050 may include a transparent or translucent lens. The at least one display 1050 may include a first display 1050-1 and/or a second display 1050-2 spaced apart from the first display 1050-1. For example, the first display 1050-1 and the second display 1050-2 may be disposed at positions corresponding to the user's left and right eyes, respectively.

Referring to FIG. 10B, the at least one display 1050 may form a display area on a lens to provide a user wearing the wearable device 1099 with visual information included in external light passing through the lens, together with other visual information distinct from the visual information. The lens may be formed based on at least one of a fresnel lens, a pancake lens, or a multi-channel lens. The display area formed by the at least one display 1050 may be formed on the second surface 1032 of the lens, from among the first surface 1031 of the lens and the second surface 1032. When the user wears the wearable device 1099, ambient light may be transmitted to the user by being incident on the first surface 1031 and being penetrated through the second surface 1032. For another example, the at least one display 1050 may display a virtual reality image to be combined with a reality screen transmitted through external light. The virtual reality image outputted from the at least one display 1050 may be transmitted to the user's eyes through one or more hardware (e.g., optical devices 1082 and 1084 and/or at least one waveguides 1033 and 1034) included in the wearable device 1099.

According to an embodiment, the wearable device 1099 may include waveguides 1033 and 1034 that transmits light transmitted from the at least one display 1050 and relayed by the at least one optical device 1082 and 1084 by diffracting to the user. The waveguides 1033 and 1034 may be formed based on at least one of glass, plastic, or polymer. A nano pattern may be formed on at least a portion of the outside or inside of the waveguides 1033 and 1034. The nano pattern may be formed based on a grating structure having a polygonal or curved shape. Light incident to an end of the waveguides 1033 and 1034 may be propagated to another end of the waveguides 1033 and 1034 by the nano pattern. The waveguides 1033 and 1034 may include at least one of at least one diffraction element (e.g., a diffractive optical element (DOE), a holographic optical element (HOE)), and a reflection element (e.g., a reflection mirror). For example, the waveguides 1033 and 1034 may be disposed in the wearable device 1099 to guide a screen displayed by the at least one display 1050 to the user's eyes. For example, the screen may be transmitted to the user's eyes based on total internal reflection (TIR) generated in the waveguides 1033 and 1034.

The wearable device 1099 may analyze an object included in a real image collected through a photographing camera 1040-1, combine with a virtual object corresponding to an object that becomes a subject of augmented reality provision among the analyzed object, and display on the at least one display 1050. The virtual object may include at least one of text and images for various information associated with the object included in the real image. The wearable device 1099 may analyze the object based on a multi-camera such as a stereo camera. For the object analysis, the wearable device 1099 may execute simultaneous localization and mapping (SLAM) and/or time-of-flight (ToF), supported by the multi-camera. The user wearing the wearable device 1099 may watch an image displayed on the at least one display 1050.

According to an embodiment, a frame may be configured with a physical structure in which the wearable device 1099 may be worn on the user's body. According to an embodiment, the frame may cause the first display 1050-1 and the second display 1050-2 to be positioned corresponding to the user's left and right eyes, when the user wears the wearable device 1099. The frame may support the at least one display 1050. For example, the frame may support the first display 1050-1 and the second display 1050-2 to be positioned at positions corresponding to the user's left and right eyes.

Referring to FIG. 10A, according to an embodiment, the frame may include an area 1020 at least partially in contact with the portion of the user's body in case that the user wears the wearable device 1099. For example, the area 1020 of the frame in contact with the portion of the user's body may include an area in contact with a portion of the user's nose, a portion of the user's ear, and a portion of the side of the user's face that the wearable device 1099 contacts. According to an embodiment, the frame may include a nose pad 1010 that is contacted on the portion of the user's body. When the wearable device 1099 is worn by the user, the nose pad 1010 may be contacted on the portion of the user's nose. The frame may include a first temple 1004 and a second temple 1005, which are contacted on another portion of the user's body that is distinct from the portion of the user's body.

For example, the frame may include a first rim 1001 surrounding at least a portion of the first display 1050-1, a second rim 1002 surrounding at least a portion of the second display 1050-2, a bridge 1003 disposed between the first rim 1001 and the second rim 1002, a first pad 1011 disposed along a portion of the edge of the first rim 1001 from one end of the bridge 1003, a second pad 1012 disposed along a portion of the edge of the second rim 1002 from the other end of the bridge 1003, the first temple 1004 extending from the first rim 1001 and fixed to a portion of the wearer's ear, and the second temple 1005 extending from the second rim 1002 and fixed to a portion of the ear opposite to the ear. The first pad 1011 and the second pad 1012 may be in contact with the portion of the user's nose, and the first temple 1004 and the second temple 1005 may be in contact with a portion of the user's face and the portion of the user's ear. The temples 1004 and 1005 may be rotatably connected to the rim through hinge units 1006 and 1007 of FIG. 10B. The first temple 1004 may be rotatably connected with respect to the first rim 1001 through the first hinge unit 1006 disposed between the first rim 1001 and the first temple 1004. The second temple 1005 may be rotatably connected with respect to the second rim 1002 through the second hinge unit 1007 disposed between the second rim 1002 and the second temple 1005. According to an embodiment, the wearable device 1099 may identify an external object (e.g., a user's fingertip) touching the frame and/or a gesture performed by the external object by using a touch sensor, a grip sensor, and/or a proximity sensor formed on at least a portion of the surface of the frame.

According to an embodiment, the wearable device 1099 may include hardware that perform various functions. For example, the hardware may include a battery module 1070, an antenna module 1075, optical devices 1082 and 1084, speakers 1092-1 and 1092-2, a microphone 1094-1, 1094-2, and 1094-3, a light emitting module (not illustrated), and/or a printed circuit board 1090. Various hardware may be disposed in the frame.

According to an embodiment, the microphone (e.g., the microphones 1094-1, 1094-2, and 1094-3) of the wearable device 1099 may obtain a sound signal, by being disposed on at least a portion of the frame. The first microphone 1094-1 disposed on the nose pad 1010, the second microphone 1094-2 disposed on the second rim 1002, and the third microphone 1094-3 disposed on the first rim 1001 are illustrated in FIG. 10B, but the number and disposition of the microphone 1094 are not limited to an embodiment of FIG. 10B. In case that the number of the microphone 1094 included in the wearable device 1099 is two or more, the wearable device 1099 may identify a direction of the sound signal by using a plurality of microphones disposed on different portions of the frame.

According to an embodiment, the optical devices 1082 and 1084 may transmit a virtual object transmitted from the at least one display 1050 to the waveguides 1033 and 1034. For example, the optical devices 1082 and 1084 may be a projector. The optical devices 1082 and 1084 may be disposed adjacent to the at least one display 1050 or may be included in the at least one display 1050 as a portion of the at least one display 1050. The first optical device 1082 may correspond to the first display 1050-1, and the second optical device 1084 may correspond to the second display 1050-2. The first optical device 1082 may transmit light outputted from the first display 1050-1 to the first wave guide 1033, and the second optical device 1084 may transmit light outputted from the second display 1050-2 to the second wave guide 1034.

In an embodiment, a camera may include an eye tracking camera (ET CAM) 1040-1, the motion recognition camera 1040-2, and/or the photographing camera 1040-3. The photographing camera 1040-3, the eye tracking camera 1040-1, and the motion recognition camera 1040-2 may be disposed at different positions on the frame and may perform different functions. The eye tracking camera 1040-1 may output data indicating a gaze of the user wearing the wearable device 1099. For example, the wearable device 1099 may detect the gaze from an image including the user's pupil obtained through the eye tracking camera 1040-1. An example in which the eye tracking camera 1040-1 is disposed toward the user's right eye is illustrated in FIG. 10B, but the embodiment is not limited thereto, and the eye tracking camera 1040-1 may be disposed alone toward the user's left eye or may be disposed toward two eyes.

In an embodiment, the photographing camera 1040-3 may photograph a real image or background to be matched with a virtual image in order to implement the augmented reality or mixed reality content. The photographing camera may photograph an image of a specific object existing at a position viewed by the user and may provide the image to the at least one display 1050. The at least one display 1050 may display one image in which a virtual image provided through the optical devices 1082 and 1084 is overlapped with information on the real image or background including an image of the specific object obtained by using the photographing camera. In an embodiment, the photographing camera may be disposed on the bridge 1003 disposed between the first rim 1001 and the second rim 1002.

In an embodiment, the eye tracking camera 1040-1 may implement a more realistic augmented reality by matching the user's gaze with the visual information provided on the at least one display 1050, by tracking the gaze of the user wearing the wearable device 1099. For example, when the user looks at the front, the wearable device 1099 may naturally display environment information associated with the user's front on the at least one display 1050 at a position where the user is positioned. The eye tracking camera 1040-1 may cause to capture an image of the user's pupil in order to determine the user's gaze. For example, the eye tracking camera 1040-1 may receive gaze detection light reflected from the user's pupil and may track the user's gaze based on the position and movement of the received gaze detection light. In an embodiment, the eye tracking camera 1040-1 may be disposed at a position corresponding to the user's left and right eyes. For example, the eye tracking camera 1040-1 may be disposed in the first rim 1001 and/or the second rim 1002 to face the direction in which the user wearing the wearable device 1099 is positioned.

In an embodiment, the motion recognition camera 1040-2 may provide a specific event to the screen provided on the at least one display 1050 by recognizing the movement of the whole or portion of the user's body, such as the user's torso, hand, or face. The motion recognition camera 1040-2 may obtain a signal corresponding to motion by recognizing the user's motion (e.g., gesture recognition), and may provide a display corresponding to the signal to the at least one display 1050. The processor may identify a signal corresponding to the operation and may perform a preset function based on the identification. In an embodiment, the motion recognition camera 1040-2 may be disposed on the first rim 1001 and/or the second rim 1002.

In an embodiment, the camera included in the wearable device 1099 is not limited to the above-described eye tracking camera 1040-1 and the motion recognition camera 1040-2. For example, the wearable device 1099 may identify an external object included in a field of view (FoV) by using the photographing camera 1040-3 disposed toward the user's FoV. The wearable device 1099 identifying the external object may be performed based on a sensor for identifying a distance between the wearable device 1099 and the external object, such as a depth sensor and/or a time of flight (ToF) sensor. The camera disposed toward the FoV may support an autofocus function and/or an optical image stabilization (OIS) function. For example, in order to obtain an image including a face of the user wearing the wearable device 1099, the wearable device 1099 may include a camera (e.g., a face tracking (FT) camera) disposed toward the face.

Although not illustrated, the wearable device 1099 according to an embodiment may further include a light source (e.g., LED) that emits light toward a subject (e.g., user's eyes, face, and/or an external object in the FoV) photographed by using a camera. The light source may include an LED having an infrared wavelength. The light source may be disposed on at least one of the frame, and the hinge units 1006 and 1007.

According to an embodiment, the battery module 1070 may supply power to electronic components of the wearable device 1099. In an embodiment, the battery module 1070 may be disposed in the first temple 1004 and/or the second temple 1005. For example, the battery module 1070 may be a plurality of battery modules 1070. The plurality of battery modules 1070, respectively, may be disposed on each of the first temple 1004 and the second temple 1005. In an embodiment, the battery module 1070 may be disposed at an end of the first temple 1004 and/or the second temple 1005.

According to an embodiment, the antenna module 1075 may transmit the signal or power to the outside of the wearable device 1099 or may receive the signal or power from the outside. The antenna module 1075 may be electrically and/or operably connected to a communication circuit in the wearable device 1099. In an embodiment, the antenna module 1075 may be disposed in the first temple 1004 and/or the second temple 1005. For example, the antenna module 1075 may be disposed close to one surface of the first temple 1004 and/or the second temple 1005.

According to an embodiment, the speakers 1092-1 and 1092-2 may output a sound signal to the outside of the wearable device 1099. A sound output module may be referred to as a speaker. In an embodiment, the speakers 1092-1 and 1092-2 may be disposed in the first temple 1004 and/or the second temple 1005 in order to be disposed adjacent to the ear of the user wearing the wearable device 1099. For example, the wearable device 1099 may include a second speaker 1092-2 disposed adjacent to the user's left ear by being disposed in the first temple 1004, and a first speaker 1092-1 disposed adjacent to the user's right ear by being disposed in the second temple 1005.

In an embodiment, the light emitting module (not illustrated) may include at least one light emitting element. The light emitting module may emit light of a color corresponding to a specific state or may emit light through an operation corresponding to the specific state in order to visually provide information on a specific state of the wearable device 1099 to the user. For example, when the wearable device 1099 requires charging, it may repeatedly emit red light at a specified timing. In an embodiment, the light emitting module may be disposed on the first rim 1001 and/or the second rim 1002.

Referring to FIG. 10B, according to an embodiment, the wearable device 1099 may include the printed circuit board (PCB) 1090. The PCB 1090 may be included in at least one of the first temple 1004 or the second temple 1005. The PCB 1090 may include an interposer disposed between at least two sub PCBs. On the PCB 1090, one or more included in the wearable device 1099 may be disposed. The wearable device 1099 may include a flexible PCB (FPCB) for interconnecting the hardware.

According to an embodiment, the wearable device 1099 may include at least one of a gyro sensor, a gravity sensor, and/or an acceleration sensor for detecting the posture of the wearable device 1099 and/or the posture of a body part (e.g., a head) of the user wearing the wearable device 1099. Each of the gravity sensor and the acceleration sensor may measure gravity acceleration, and/or acceleration based on preset 3-dimensional axes (e.g., x-axis, y-axis, and z-axis) perpendicular to each other. The gyro sensor may measure angular velocity of each of preset 3-dimensional axes (e.g., x-axis, y-axis, and z-axis). At least one of the gravity sensor, the acceleration sensor, and the gyro sensor may be referred to as an inertial measurement unit (IMU). According to an embodiment, the wearable device 1099 may identify the user's motion and/or gesture performed to execute or stop a specific function of the wearable device 1099 based on the IMU.

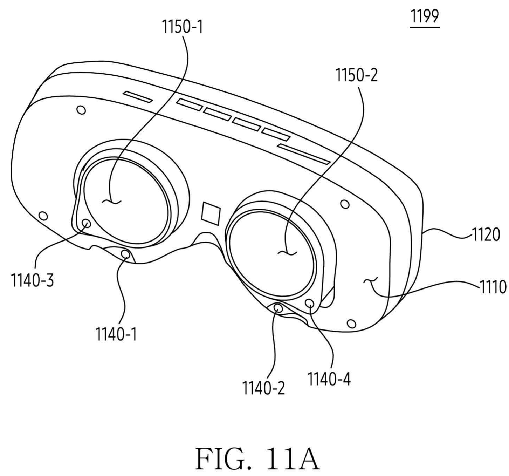

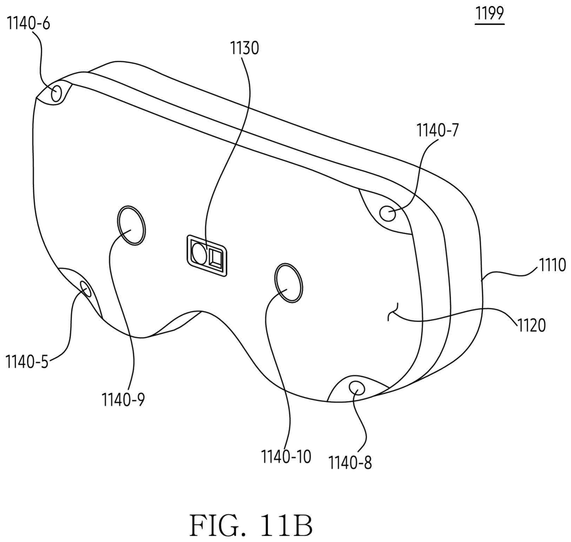

FIGS. 11A to 11B illustrate an example of an exterior of a wearable device 1199 according to an embodiment. The wearable device 1199 of FIGS. 11A to 11B may be included in the electronic device 101 of FIG. 1. According to an embodiment, an example of an exterior of a first surface 1110 of a housing of the wearable device 1199 may be illustrated in FIG. 11A, and an example of an exterior of a second surface 1120 opposite to the first surface 1110 may be illustrated in FIG. 11B.

Referring to FIG. 11A, according to an embodiment, the first surface 1110 of the wearable device 1199 may have an attachable shape on the user's body part (e.g., the user's face). Although not illustrated, the wearable device 1199 may further include a strap for being fixed on the user's body part, and/or one or more temples (e.g., the first temple 1004 and/or the second temple 1005 of FIGS. 10A to 10B). A first display 1150-1 for outputting an image to the left eye among the user's two eyes and a second display 1150-2 for outputting an image to the right eye among the user's two eyes may be disposed on the first surface 1110. The wearable device 1199 may further include rubber or silicon packing, which are formed on the first surface 1110, for preventing interference by light (e.g., ambient light) different from the light emitted from the first display 1150-1 and the second display 1150-2.

According to an embodiment, the wearable device 1199 may include cameras 1140-1 and 1140-2 for photographing and/or tracking two eyes of the user adjacent to each of the first display 1150-1 and the second display 1150-2. The cameras 1140-1 and 1140-2 may be referred to as the ET camera. According to an embodiment, the wearable device 1199 may include cameras 1140-3 and 1140-4 for photographing and/or recognizing the user's face. The cameras 1140-3 and 1140-4 may be referred to as a FT camera.

Referring to FIG. 11B, a camera (e.g., cameras 1140-5, 1140-6, 1140-7, 1140-8, 1140-9, and 1140-10), and/or a sensor (e.g., the depth sensor 1130) for obtaining information associated with the external environment of the wearable device 1199 may be disposed on the second surface 1120 opposite to the first surface 1110 of FIG. 11A. For example, the cameras 1140-5, 1140-6, 1140-7, 1140-8, 1140-9, and 1140-10 may be disposed on the second surface 1120 in order to recognize an external object distinct from the wearable device 1199. For example, the wearable device 1199 may obtain an image and/or video to be transmitted to each of the user's two eyes, by using the cameras 1140-9 and 1140-10. The camera 1140-9 may be disposed on the second surface 1120 of the wearable device 1199 to obtain an image to be displayed through the second display 1150-2 corresponding to the right eye among the two eyes. The camera 1140-10 may be disposed on the second surface 1120 of the wearable device 1199 to obtain an image to be displayed through the first display 1150-1 corresponding to the left eye among the two eyes.

According to an embodiment, the wearable device 1199 may include the depth sensor 1130 disposed on the second surface 1120 in order to identify a distance between the wearable device 1199 and the external object. By using the depth sensor 1130, the wearable device 1199 may obtain spatial information (e.g., a depth map) about at least a portion of the FoV of the user wearing the wearable device 1199.

Although not illustrated, a microphone for obtaining sound outputted from the external object may be disposed on the second surface 1120 of the wearable device 1199. The number of microphones may be one or more according to embodiments.

As described above, according to an embodiment, the wearable device 1199 may have a form factor to be worn on a head of the user. The wearable device 1199 may provide a user experience based on augmented reality, virtual reality, and/or mixed reality in state of being worn on the head. Using the cameras 1140-5, 1140-6, 1140-7, 1140-8, 1140-9, and 1140-10 for recording a video of an external space, the wearable device 1199 and a server (e.g., the server 108 of FIG. 1) connected to the wearable device 1199 may provide an on-demand service and/or a metaverse service that provide video of a location and/or a place selected by the user.

According to an embodiment, the wearable device 1199 may display frames obtained via the cameras 1140-9 and 1140-10 on each of the second display 1150-2 and the first display 1150-1. The wearable device 1199 may provide a user experience (e.g., video see-through (VST)) in which a real object and a virtual object are mixed by combining a virtual object in a frame including a real object, the frame being displayed via the first display 1150-1 and the second display 1150-2. The wearable device 1199 may change the virtual object based on information obtained by the cameras 1140-1, 1140-2, 1140-3, 1140-4, 1140-5, 1140-6, 1140-7, and 1140-8, and/or the depth sensor 1130. For example, in a case in which a visual object corresponding to the real object and the virtual object are at least partially overlapped in the frame, the wearable device 1199 may cease displaying the virtual object based on detecting a motion for interacting with the real object. By ceasing the display of the virtual object, the wearable device 1199 may prevent degradation of visibility of the real object as the visual object corresponding to the real object is occluded by the virtual object.

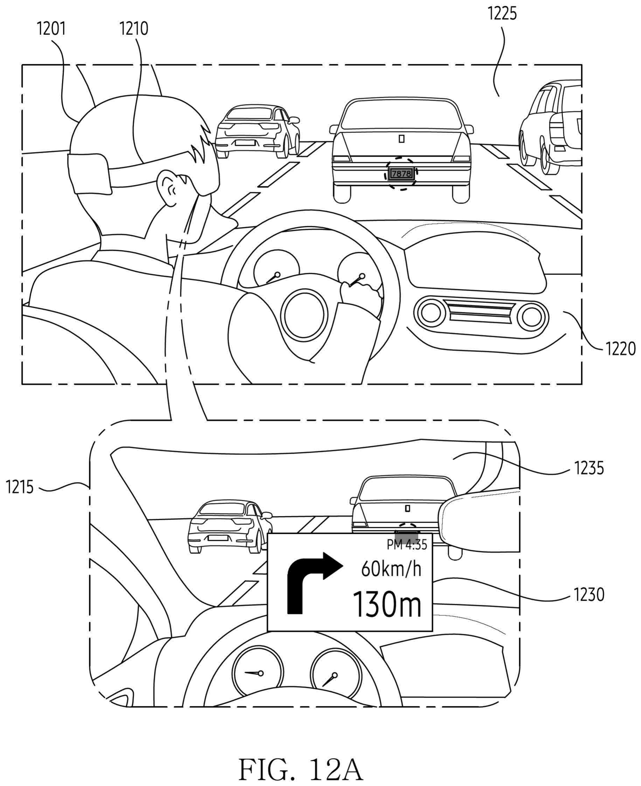

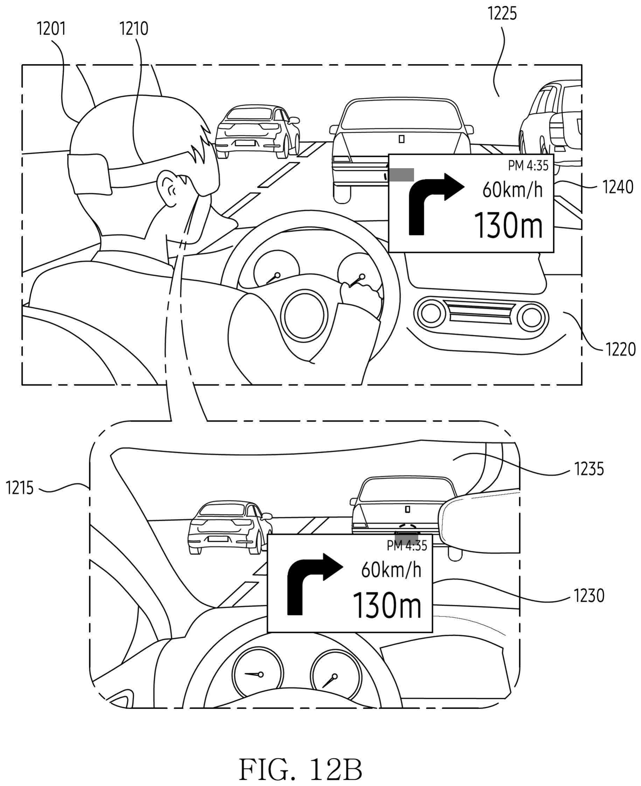

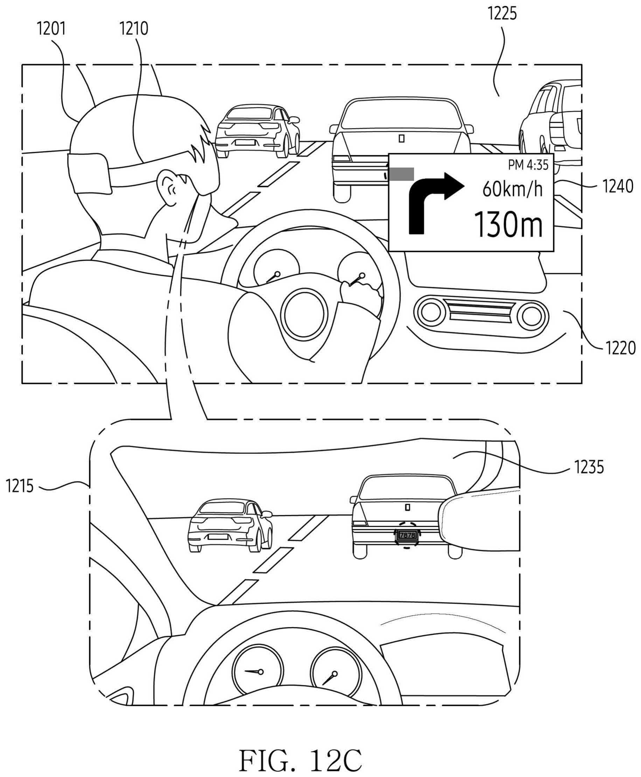

FIG. 12A illustrates an example of a user 1201 wearing a wearable device 1210. FIG. 12B illustrates an example of a screen displayed on a wearable device according to an embodiment. FIG. 12C illustrates an example of a screen displayed on a wearable device or a display according to an embodiment.

The wearable device 1210 of FIG. 12A, FIG. 12B, and FIG. 12C may correspond to the electronic device 101 of FIG. 1, FIG. 2, and FIG. 3A. The wearable device 1210 of FIG. 12A, FIG. 12B, and FIG. 12C may correspond to the wearable device 1099 of FIG. 10A and FIG. 10B. The wearable device 1210 of FIG. 12A, FIG. 12B, and FIG. 12C may correspond to the wearable device 1199 of FIG. 11A and FIG. 11B.

A vehicle 1220 of FIG. 12A, FIG. 12B, and FIG. 12C may correspond to the vehicle 210 of FIG. 2 and FIG. 3A.

FIG. 12A may indicate a situation in which a content 1230 is displayed on the wearable device 1210. FIG. 12A exemplifies a situation prior to establishing a communication connection between the wearable device 1210 and an electronic device (e.g., an electronic device 205) of the vehicle 1220.

In an embodiment, referring to FIG. 12A, the wearable device 1210 may display a screen 1215. For example, the wearable device 1210 may display the screen 1215 via a display (e.g., the display 1050 of FIGS. 10A and 10B, or the at least one display 1150-1 and/or 1150-2 of FIG. 11A). The screen 1215 may include a region in which the content 1230 is displayed, and a pass-through region 1235 reflecting real space. The pass-through region 1235 may reflect real space (e.g., a windshield 1225) of the vehicle 1220 viewed by the user 1201. Herein, the content 1230 may include an execution result of an application. For example, the content 1230 may include driving-related information of a navigation application.

In an embodiment, the wearable device 1210 may establish a communication connection with the electronic device 205 of the vehicle 1220. Herein, the communication connection between the wearable device 1210 and the electronic device 205 of the vehicle 1220 may be a communication connection based on Bluetooth. For example, the communication connection may be a communication connection based on low energy (LE) audio. However, it is not limited thereto. According to an embodiment, the communication connection may be based on Bluetooth low energy (BLE). The communication connection may be based on a communication technique different from Bluetooth. For example, the communication connection may be based on WiFi. The communication connection may be a unidirectional communication connection from the wearable device 1210 to at least one electronic device 205. The communication connection may be a bidirectional communication connection based on a method different from Bluetooth. However, it is not limited thereto.

In an embodiment, FIG. 12B may illustrate a situation in which content 1230 and 1240 are displayed on the wearable device 1210 and the vehicle 1220. FIG. 12B illustrates a situation after establishing the communication connection between the wearable device 1210 and the electronic device (e.g., the electronic device 205) of the vehicle 1220.

In an embodiment, referring to FIG. 12B, the wearable device 1210 may transmit a media file via the communication connection with the electronic device 205. The wearable device 1210 may transmit the media file so that the electronic device 205 outputs a content based on the media file. For example, the electronic device 205 may output a content 1240 based on the media file via a display (e.g., a display 265). For example, the electronic device 205 may output the content 1240 via the display 265 of the windshield 1225. In an embodiment, the display 265 may be a head up display (HUD) in which the content 1240 is projected onto the windshield 1225, and the content 1240 reflected via the windshield 1225 is provided to the user 1201. In an embodiment, the display 265 may be a head up display (HUD) located in a space between the user 1201 and the windshield 1225, and may directly provide the content 1240 to the user 1201.

In an embodiment, the wearable device 1210 may transmit a control signal for the electronic device 205 to display the content 1240 more clearly. The wearable device 1210 may display the content 1230 output by the wearable device 1210 more dimly. The content 1230 may not be displayed on the wearable device 1210. Brightness of the content 1230 displayed on the wearable device 1210 may converge to zero.

In an embodiment, FIG. 12C may indicate a situation in which the content 1240 is displayed on the vehicle 1220. FIG. 12C exemplifies a situation after establishing the communication connection between the wearable device 1210 and the electronic device 205.

In an embodiment, referring to FIG. 12C, the wearable device 1210 may transmit a media file via a communication connection 315 with the electronic device 205. The wearable device 1210 may cease displaying the content 1230 via the wearable device 1210. The wearable device 1210 may display only a pass-through region 1235 reflecting real space. The electronic device 205 may output the content 1240 based on the media file via the display 265. For example, the electronic device 205 may output the content 1240 via the display 265 of the windshield 1225.

As described above, an electronic device 101 may comprise at least one first communication circuit 290. The electronic device 101 may comprise at least one sensor 270 for obtaining data for identifying positions of irises of two eyes of the user. The electronic device 101 may comprise at least one processor 120. The electronic device 101 may comprise at least one memory 130 storing instructions. The instructions, when executed by the at least one processor 120, may cause the electronic device 101 to receive, via the at least one first communication circuit 290, a request for a first communication connection from at least one second communication circuit 295 of a vehicle 210. The instructions, when executed by the at least one processor 120, may cause the electronic device 101 to, based on the first communication connection, receive object information regarding at least one object 381, 383, and/or 385 near the vehicle 210 from the at least one second communication circuit 295. The instructions, when executed by the at least one processor 120, may cause the electronic device 101 to identify a gaze 390 of the user based on the data for identifying the positions of the irises. The instructions, when executed by the at least one processor 120, may cause the electronic device 101 to identify an object out of the gaze 390 of the user from among the at least one object 381, 383, and/or 385, based on the object information. The instructions, when executed by the at least one processor 120, may cause the electronic device 101 to, based on the object information, output a notification regarding the object identified as out of the gaze of the user.

The instructions, when executed by the at least one processor 120, may cause the electronic device 101 to transmit, via the at least one first communication circuit 290, the object information regarding the object identified as out of the gaze to an external electronic device 201 and/or 203 worn by the user for the external electronic device 201 and/or 203 to output the notification.

The instructions, when executed by the at least one processor 120, may cause the electronic device 101 to transmit the object information regarding the object identified as out of the gaze of the user to the external electronic device 201 and/or 203 for the external electronic device 201 and/or 203 to output the notification via at least one first display 260 of the external electronic device 201 and/or 203 for displaying a stereoscopic image.

The instructions, when executed by the at least one processor 120, may cause the electronic device 101 to transmit, via the at least one first communication circuit 290, the object information regarding the object identified as out of the gaze of the user to the external electronic device 201 and/or 203 for the external electronic device 201 and/or 203 to output the notification via at least one speaker 251 and/or 253 of the external electronic device 201 and/or 203.

The instructions, when executed by the at least one processor 120, may cause the electronic device 101 to receive a request for a communication connection from the at least one second communication circuit 295, while transmitting an audio content to an external electronic device 201 and/or 203 worn by the user via a second communication connection with the external electronic device 201 and/or 203.

The instructions, when executed by the at least one processor 120, may cause the electronic device 101 to, after establishing the communication connection, transmit the audio content to the vehicle 210 instead of the external electronic device 201 and/or 203 via the communication connection.

The instructions, when executed by the at least one processor 120, may cause the electronic device 101 to, in response to receiving the request for the first communication connection, switch the communication connection to the first communication connection. The communication connection may be a unidirectional communication connection, and the first communication connection may be a bidirectional communication connection.

The instructions, when executed by the at least one processor 120, may cause the electronic device 101 to, in response to receiving the request for the first communication connection, establish the first communication connection different from the communication connection. The communication connection may be a unidirectional communication connection, and the first communication connection may be a bidirectional communication connection.

The electronic device 101 may further comprise at least one sensor 270 obtaining data for identifying the positions of the irises of the two eyes of the user. The instructions, when executed by the at least one processor 120, may cause the electronic device 101 to identify the gaze 390 of the user based on the data for identifying the positions of the irises. The instructions, when executed by the at least one processor 120, may cause the electronic device 101 to identify the object out of the identified gaze 390 from among the at least one object 381, 383, and/or 385. The instructions, when executed by the at least one processor 120, may cause the electronic device 101 to output a notification regarding the identified object.

The electronic device 101 may further comprise at least one first display 260 for displaying a stereoscopic image. The instructions, when executed by the at least one processor 120, may cause the electronic device 101 to receive a request for a communication connection from the at least one second communication circuit 295, while the electronic device 101 worn by the user displays a content as the stereoscopic image via the at least one first display 260. The instructions, when executed by the at least one processor 120, may cause the electronic device 101 to, after establishing the communication connection, transmit the content via the communication connection, for the content to be displayed as the stereoscopic image via at least one second display 265 of the vehicle 210.

The instructions, when executed by the at least one processor 120, may cause the electronic device 101 to, while the content is displayed via the at least one second display 265, cease displaying the content via the at least one first display 260.

The electronic device 101 may further comprise at least one sensor 270. The instructions, when executed by the at least one processor 120, may cause the electronic device 101 to identify another user near the electronic device 101 via the at least one sensor 270. The instructions, when executed by the at least one processor 120, may cause the electronic device 101 to, based on the another user being identified, request, via the at least one first communication circuit 290, transmission of the object information to the at least one second communication circuit 295. The instructions, when executed by the at least one processor 120, may cause the electronic device 101 to, based on the another user not being identified, request, via the at least one first communication circuit 290, a cessation of the transmission of the object information to the at least one second communication circuit 295.

As described above, a method may be performed by an electronic device 101 including at least one communication circuit 290 and at least one sensor 270 obtaining data for identifying positions of irises of two eyes of the user. The method may comprise receiving, via the at least one first communication circuit 290, a request for a first communication connection from at least one second communication circuit 295 of a vehicle 210. The method may comprise, based on the first communication connection, receiving object information regarding at least one object 381, 383, and/or 385 near the vehicle 210 from the at least one other communication circuit 295. The method may comprise identifying a gaze 390 of the user based on the data for identifying the positions of the irises. The method may comprise identifying an object out of the gaze 390 of the user from among the at least one object 381, 383, and/or 385, based on the object information. The method may comprise, based on the object information, outputting a notification regarding the object identified as out of the gaze of the user.

The method may comprise transmitting, via the at least one first communication circuit 290, the object information regarding the object identified as out of the gaze of the user to an external electronic device 201 and/or 203 worn by the user for the external electronic device 201 and/or 203 to output the notification.

The method may comprise transmitting the object information regarding the object identified as out of the gaze of the user to the external electronic device 201 and/or 203 for the external electronic device 201 and/or 203 to output the notification via at least one first display 260 of the external electronic device 201 and/or 203 for displaying a stereoscopic image.

The method may comprise transmitting, via the at least one first communication circuit 290, the object information regarding the object identified as out of the gaze of the user to the external electronic device 201 and/or 203 for the external electronic device 201 and/or 203 to output the notification via at least one speaker 251 and/or 253 of the external electronic device 201 and/or 203.

The method may comprise receiving a request for a communication connection from the at least one second communication circuit 295, while transmitting an audio content to an external electronic device 201 and/or 203 worn by the user via a second communication connection with the external electronic device 201 and/or 203. The method may comprise, after establishing the communication connection, transmitting the audio content to the vehicle 210 instead of the external electronic device 201 and/or 203 via the communication connection.

The method may comprise, via the at least one sensor 270 of the electronic device 101, identifying the gaze 390 of the user based on data for identifying the positions of the irises. The method may comprise identifying the gaze 390 of the user based on the data for identifying the position of the iris. The method may comprise identifying an object out of the identified gaze 390 of the user from among the at least one object 381, 383, and/or 385. The method may comprise outputting a notification regarding the identified object.

The method may comprise displaying a content as a stereoscopic image via at least one first display of the electronic device while the electronic device is worn by the user. The method may comprise receiving a request for a communication connection from the at least one second communication circuit while the electronic device worn by the user displays a content via the at least one first display of the electronic device. The method may comprise, after establishing the communication connection, transmitting the content via the communication connection, for the content to be displayed as the stereoscopic image via at least one other display of the vehicle.

The method may comprise identifying another user near the electronic device via at least one sensor of the electronic device. The method may comprise, based on the another user being identified, requesting, via the at least one first communication circuit, transmission of the object information to the at least one second communication circuit. The method may comprise, based on the another user not being identified, requesting, via the at least one first communication circuit, a cessation of the transmission of the object information to the at least one second communication circuit.

As described above, a non-transitory computer readable storage medium may comprise a program including instructions. The instructions, when executed by at least one processor 120 of an electronic device 101 comprising at least one communication circuit 290 and at least one sensor 270 obtaining data for identifying positions of irises of two eyes of the user, may cause the electronic device 101 to receive, via the at least one first communication circuit 290, a request for a first communication connection from at least one second communication circuit 295 of a vehicle 210. The instructions, when executed by the at least one processor 120, may cause the electronic device 101 to, based on the first communication connection, receive object information regarding at least one object 381, 383, and/or 385 near the vehicle 210 from the at least one second communication circuit 295. The instructions, when executed by the at least one processor 120, may cause the electronic device 101 to identify a gaze 390 of the user based on the data for identifying the positions of the irises. The instructions, when executed by the at least one processor 120, may cause the electronic device 101 to identify an object out of the gaze 390 of the user from among the at least one object 381, 383, and/or 385, based on the object information. The instructions, when executed by the at least one processor 120, may cause the electronic device 101 to, based on the object information, output a notification regarding the object identified as out of the gaze of the user.

As described above, an electronic device 205 may comprise at least one sensor 275. The electronic device 205 may comprise at least one other sensor obtaining data for identifying positions of irises of two eyes of the user. The electronic device 205 may comprise at least one speaker 255. The electronic device 205 may comprise at least one first communication circuit 295. The electronic device 205 may comprise at least one processor 225. The electronic device 205 may comprise at least one memory 235 storing instructions. The instructions, when executed by the at least one processor 225, may cause the electronic device 205 to receive, via the at least one first communication circuit 295, a request for a communication connection from at least one second communication circuit 290 of an external electronic device 101. The instructions, when executed by the at least one processor 225, may cause the electronic device 205 to, based on the communication connection, receive an audio content from the external electronic device 101. The instructions, when executed by the at least one processor 225, may cause the electronic device 205 to output, via the at least one speaker 255, the audio content. The instructions, when executed by the at least one processor 225, may cause the electronic device 205 to obtain information regarding at least one object 381, 383, and/or 385 near the electronic device 205 via the at least one sensor 275. The instructions, when executed by the at least one processor 225, may cause the electronic device 205 to identify a gaze 390 of the user based on the data for identifying the positions of the irises. The instructions, when executed by the at least one processor 225, may cause the electronic device 205 to identify an object out of the gaze 390 of the user from among the at least one object 381, 383, and/or 385, based on the information regarding the at least one object 381, 383, and/or 385. The instructions, when executed by the at least one processor 225, may cause the electronic device 205 to, based on that the object out of the gaze 390 is identified, transmit a request for a first communication connection to the at least one second communication circuit 290 via the at least one first communication circuit 295. The instructions, when executed by the at least one processor 225, may cause the electronic device 205 to, based on the first communication connection, transmit, to the external electronic device 101, object information regarding the object identified as out of the gaze 390 of the user, for the external electronic device 101 to output a notification regarding the identified object based on the object information regarding the object identified as out of the gaze 390 of the user.

The communication connection may be a unidirectional communication connection, and the first communication connection may be a bidirectional communication connection.

The electronic device may further comprise at least one other sensor 275 obtaining data for identifying the positions of the irises of the two eyes of the user. The instructions, when executed by the at least one processor 225, may cause the electronic device 205 to identify the gaze 390 of the user based on the data for identifying the positions of the irises.

The instructions, when executed by the at least one processor 225, may cause the electronic device 205 to identify another user near the electronic device 205 via the at least one sensor 275. The instructions, when executed by the at least one processor 225, may cause the electronic device 205 to, based on the another user being identified, transmit, based on the first communication connection, the object information regarding the object identified as out of the gaze 390 of the user to the external electronic device 101. The instructions, when executed by the at least one processor 225, may cause the electronic device 205 to, based on the another user not being identified, output the notification via the at least one speaker 255 instead of transmitting the object information.

As described above, a method may be performed by an electronic device 205 comprising at least one sensor 275, at least one other sensor obtaining data for identifying positions of irises of two eyes of the user, at least one speaker 255, and at least one first communication circuit 295. The method may comprise receiving, via the at least one first communication circuit 295, a request for a communication connection from at least one second communication circuit 290 of an external electronic device 101. The method may comprise, based on the communication connection, receiving an audio content from the external electronic device 101. The method may comprise outputting, via the at least one speaker 255, the audio content. The method may comprise obtaining information regarding at least one object 381, 383, and/or 385 near the electronic device 205 via the at least one sensor 275. The method may comprise identifying a gaze 390 of the user based on the data for identifying the positions of the irises. The method may comprise identifying an object out of the gaze 390 of the user from among the at least one object 381, 383, and/or 385, based on the information regarding the at least one object 381, 383, and/or 385. The method may comprise, based on that the object out of the gaze 390 is identified, transmitting a request for a first communication connection to the at least one second communication circuit 290 via the at least one first communication circuit 295. The method may comprise, based on the first communication connection, transmitting, to the external electronic device 101, object information regarding the object identified as out of the gaze 390 of the user, for the external electronic device 101 to output a notification regarding the identified object based on the object information regarding the object identified as out of the gaze 390 of the user.

As described above, a non-transitory computer readable storage medium may comprise a program including instructions. The instructions, when executed by at least one processor 225 of an electronic device 205 comprising at least one sensor 275, at least one other sensor obtaining data for identifying positions of irises of two eyes of the user, at least one speaker 255, and at least one first communication circuit 295, may cause the electronic device 205 to receive, via the at least one first communication circuit 295, a request for a communication connection from at least one second communication circuit 290 of an external electronic device 101. The instructions, when executed by the at least one processor 225, may cause the electronic device 205 to, based on the communication connection, receive an audio content from the external electronic device 101. The instructions, when executed by the at least one processor 225, may cause the electronic device 205 to output, via the at least one speaker 255, the audio content. The instructions, when executed by the at least one processor 225, may cause the electronic device 205 to obtain information regarding at least one object 381, 383, and/or 385 near the electronic device 205 via the at least one sensor 275. The instructions, when executed by the at least one processor 225, may cause the electronic device 205 to identify a gaze 390 of the user based on the data for identifying the positions of the irises. The instructions, when executed by the at least one processor 225, may cause the electronic device 205 to identify an object out of the gaze 390 of the user from among the at least one object 381, 383, and/or 385, based on the information regarding the at least one object 381, 383, and/or 385. The instructions, when executed by the at least one processor 225, may cause the electronic device 205 to, based on that the object out of the gaze 390 is identified, transmit a request for a first communication connection to the at least one second communication circuit 290 via the at least one first communication circuit 295. The instructions, when executed by the at least one processor 225, may cause the electronic device 205 to, based on the first communication connection, transmit, to the external electronic device 101, object information regarding the object identified as out of the gaze 390 of the user, for the external electronic device 101 to output a notification regarding the identified object based on the object information regarding the object identified as out of the gaze 390 of the user.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101), comprising:
at least one first communication circuit (290),
at least one sensor (270) obtaining data for identifying positions of irises of two eyes of the user,
at least one processor (120), and
at least one memory (130) storing instructions, wherein the instructions are configured, when executed by the at least one processor (120), to cause the electronic device (101) to:
receive, via the at least one first communication circuit (290), a request for a first communication connection from at least one second communication circuit (295) of a vehicle (210),
based on the first communication connection, receive object information regarding at least one object (381, 383, 385) near the vehicle (210) from the at least one second communication circuit (295),
identify a gaze (390) of the user based on the data for identifying the positions of the irises,
identify an object out of the gaze (390) of the user from among the at least one object (381, 383, 385), based on the object information, and
based on the object information, output a notification regarding the object identified as out of the gaze (390) of the user.

2. The electronic device (101) of claim 1,
wherein the instructions are configured, when executed by the at least one processor (120), to cause the electronic device (101) to:
transmit, via the at least one first communication circuit (290), the object information regarding the object identified as out of the gaze (390) of the user to an external electronic device (201, 203) worn by the user for the external electronic device (201, 203) to output the notification.

3. The electronic device (101) of claim 2,
wherein the instructions are configured, when executed by the at least one processor (120), to cause the electronic device (101) to:
transmit the object information regarding the object identified as out of the gaze (390) of the user to the external electronic device (201, 203) for the external electronic device (201, 203) to output the notification via at least one first display (260) of the external electronic device (201, 203) for displaying a stereoscopic image.

4. The electronic device (101) of claim 2,
wherein the instructions are configured, when executed by the at least one processor (120), to cause the electronic device (101) to:
transmit, via the at least one first communication circuit (290), the object information regarding the object identified as out of the gaze (390) of the user to the external electronic device (201, 203) for the external electronic device (201, 203) to output the notification via at least one speaker (251, 253) of the external electronic device (201, 203).

5. The electronic device (101) of claim 1,
wherein the instructions are configured, when executed by the at least one processor (120), to cause the electronic device (101) to:
receive a request for a communication connection from the at least one second communication circuit (295), while transmitting an audio content to an external electronic device (201, 203) worn by the user via a second communication connection with the external electronic device (201, 203), and
after establishing the communication connection, transmit the audio content to the vehicle (210) instead of the external electronic device (201, 203) via the communication connection.

6. The electronic device (101) of claim 5,
wherein the instructions are configured, when executed by the at least one processor (120), to cause the electronic device (101) to:
in response to receiving the request for the first communication connection, switch the communication connection to the first communication connection,
wherein the communication connection is a unidirectional communication connection, and
wherein the first communication connection is a bidirectional communication connection.

7. The electronic device (101) of claim 5,
wherein the instructions are configured, when executed by the at least one processor (120), to cause the electronic device (101) to:
in response to receiving the request for the first communication connection, establish the first communication connection different from the communication connection,
wherein the communication connection is a unidirectional communication connection, and
wherein the first communication connection is a bidirectional communication connection.

8. The electronic device (101) of claim 1, further comprising:
at least one first display (260) for displaying a stereoscopic image,
wherein the instructions are configured, when executed by the at least one processor (120), to cause the electronic device (101) to:
receive a request for a communication connection from the at least one second communication circuit (295), while the electronic device (101) worn by the user displays a content as the stereoscopic image via the at least one first display (260), and
after establishing the communication connection, transmit the content via the communication connection, for the content to be displayed as the stereoscopic image via at least one second display of the vehicle (210).

9. The electronic device (101) of claim 8,
wherein the instructions are configured, when executed by the at least one processor (120), to cause the electronic device (101) to:
while the content is displayed via the at least one second display, cease displaying the content via the at least one first display (260).

10. The electronic device (101) of claim 1, further comprising:
at least one sensor,
wherein the instructions are configured, when executed by the at least one processor (120), to cause the electronic device (101) to:
identify another user near the electronic device (101) via the at least one sensor,
based on the another user being identified, request, via the at least one first communication circuit (290), transmission of the object information to the at least one second communication circuit (295), and
based on the another user not being identified, request, via the at least one first communication circuit (290), a cessation of the transmission of the object information to the at least one second communication circuit (295).

11. An electronic device (205) comprising:
at least one sensor (275),
at least one other sensor obtaining data for identifying positions of irises of two eyes of the user,
at least one speaker (255),
at least one first communication connection,
at least one processor (225), and
at least one memory (235) storing instructions, wherein the instructions are configured, when executed by the at least one processor (225), to cause the electronic device (205) to:
receive, via the at least one first communication circuit (295), a request for a communication connection from at least one second communication circuit (290) of an external electronic device (101),
based on the communication connection, receive an audio content from the external electronic device (101),
output, via the at least one speaker (255), the audio content,
obtain information regarding at least one object (381, 383, 385) near the electronic device (205) via the at least one sensor (275),
identify a gaze (390) of the user based on the data for identifying the positions of the irises,
identify an object out of the gaze (390) of the user from among the at least one object (381, 383, 385), based on the information regarding the at least one object (381, 383, 385),
based on that the object out of the gaze (390) is identified, transmit a request for a first communication connection to the at least one second communication circuit (290) via the at least one first communication circuit (295),
based on the first communication connection, transmit, to the external electronic device (101), object information regarding the object identified as out of the gaze (390) of the user, for the external electronic device (101)electronic device (205) to output a notification regarding the identified object based on the object information regarding the object identified as out of the gaze (390) of the user.

12. The electronic device (205) of claim 11,
wherein the communication connection is a unidirectional communication connection, and
wherein the first communication connection is a bidirectional communication connection.

13. The electronic device (205) of claim 11,
wherein the instructions are configured, when executed by the at least one processor (225), to cause the electronic device (205) to:
identify another user near the electronic device (205) via the at least one sensor (275),
based on the another user being identified, transmit, based on the first communication connection, the object information regarding the object identified as out of the gaze (390) of the user to the externalelectronic device (205).
based on the another user not being identified, output the notification via the at least one speaker (255) instead of transmitting the object information.

14. A method performed by an electronic device (101) including at least one communication circuit and at least one sensor obtaining data for identifying positions of irises of two eyes of the user, comprising:
receiving, via the at least one first communication circuit (290), a request for a first communication connection from at least one second communication circuit (295) of a vehicle (210),
based on the first communication connection, receiving object information regarding at least one object (381, 383, 385) near the vehicle (210) from the at least one second communication circuit (295),
identifying a gaze (390) of the user based on the data for identifying the positions of the irises,
identifying an object out of the gaze (390) of the user from among the at least one object (381, 383, 385), based on the object information, and
based on the object information, outputting a notification regarding the object identified as out of the gaze (390) of the user.

15. The method of claim 14, further comprising:
transmitting, via the at least one first communication circuit (290), the object information regarding the object identified as out of the gaze (390) of the user to an external electronic device (201, 203) worn by the user for the external electronic device (201, 203) to output the notification.
